# EUROPÄISCHE PATENTSCHRIFT

(11) **EP 2 061 620 B1**
(45) Veröffentlichungstag und Bekanntmachung des Hinweises auf die Patenterteilung: **21.02.2018**
(21) Anmeldenummer: 07800164.1
(22) Anmeldetag: 03.09.2007
(51) Int. Cl.: B23K 9/02, B23K 9/095

(54) **SCHWEIßVERFAHREN ZUR DURCHFÜHRUNG EINES SCHWEIßPROZESSES**
WELDING METHOD FOR CARRYING OUT A WELDING PROCESS
PROCÉDÉ DE SOUDAGE POUR LA RÉALISATION D'UN PROCESSUS DE SOUDAGE

(30) Priorität: 08.09.2006 AT 15092006
(43) Veröffentlichungstag der Anmeldung: 27.05.2009
(73) Patentinhaber: FRONIUS INTERNATIONAL GmbH, 4643 Pettenbach (AT)
(72) Erfinder: SARDY, Bank, A-4040 Linz (AT); TRAUNER, Gernot, A-4611 Buchkirchen (AT)
(74) Vertreter: Ofner, Clemens
(86) Internationale Anmeldenummer: PCT/AT2007/000419
(87) Internationale Veröffentlichungsnummer: WO 2008/028209

(56) Entgegenhaltungen:
- EP-A- 0 248 654
- US-A- 5 756 967

## Beschreibung

Die Erfindung betrifft ein Verfahren für das Lichtbogenschweißen, entsprechend dem Ober-begriff der Ansprüche 1, 2, 3 und 12. Es sind unterschiedliche Lichtbogenschweißverfahren zur Durchführung von Schweißprozessen in einem, mit einem Lichtbogen abschmelzenden Schweißdraht bekannt. Beim MIG/ MAG-Schweißverfahren brennt ein Lichtbogen zwischen der stromführenden Drahtelektrode und dem Werkstück unter Schutzgas, wobei der maschinell zugeführte Draht als Elektrode dient und im eigenen Lichtbogen abschmilzt. Bei anderen Formen von Lichtbogenschweißverfahren mit abschmelzendem Schweißdraht, kann beispielsweise auch ein durch die Steuervorrichtung der Schweißstromwelle zeitlich gepulster Spannungs- bzw. Stromverlauf vorgesehen sein. Neben derartigen Pulsprozessen sind aber auch Lichtbogenschweißverfahren bekannt, bei denen der Drahtvorschubbewegung eine exakt gesteuerte Oszillationsbewegung in Vorwärts- bzw. Rückwärtsrichtung überlagert ist. Insbesondere bei derart automatisierten Schweißanlagen, die beispielsweise durch einen Roboter gesteuert sind, werden hohe Anforderungen hinsichtlich der Funktionszuverlässigkeit gestellt. So kann es beispielsweise zu Fehlfunktionen bei der Zuführung des Schweißdrahts kommen, die ein Zurückbrennen des Schweißdrahts bis zum Kontaktrohr des Schweißbrenners zur Folge haben. Werden derartige Fehlfunktionen nicht rechtzeitig erkannt, so kann dies beträchtliche Schäden des Kontaktrohrs bzw. des Schweißbrenners zur Folge haben.

Der Erfindung liegt daher die Aufgabe zugrunde, eine Schweißvorrichtung bzw. ein Schweißverfahren zur Durchführung von Schweißprozessen mit einem, in einem Lichtbogen abschmelzenden Schweißdraht zu schaffen, mit dem eine erhöhte Funktionssicherheit erreicht werden kann bzw. Beschädigungen des Schweißgeräts durch Fehlfunktionen vermieden bzw. gering gehalten werden können.

Diese Aufgabe wird durch das Schweißverfahren gemäß Anspruch 1 gelöst. Demnach ist ein Schweißverfahren zur Durchführung und Überwachung eines Schweißprozesses, bei dem ein erstes und ein zweites Zeitintervall mit unterschiedlichen Dauern und eine Abtastrate zur Ermittlung der Werte der Kenngröße festgelegt werden, und dass mit jeder Abtastung die Werte der Kenngröße gespeichert werden, worauf zu einem Zeitpunkt von der Steuervorrichtung aus den gespeicherten Werten der Kenngröße, die in den relativ zu dem Zeitpunkt zeitlich früheren Zeitintervallen liegen, ein erster Mittelwert und ein zweiter Mittelwert als die Kontrollgröße berechnet werden, worauf ausgehend von dem ersten Mittelwert des ersten Zeitintervalls ein oberer und ein unterer Grenzwert berechnet wird, und worauf die Kontrollgröße mit dem oberen und mit dem unteren Grenzwert verglichen wird, vorgesehen. Dies hat den Vorteil, dass durch die Steuervorrichtung automatisiert Eingriffe in den Betrieb des Schweißgeräts bzw. in den Schweißprozess möglich sind. Die Lage der Zeitintervalle kann relativ zu dem jeweils zuletzt ermittelten Wert der Kenngröße unmittelbar vorausgehend gewählt sein, es ist aber auch möglich, dass die Zeitintervalle relativ zu dem zuletzt ermittelten Wert der Kenngröße mit einer bestimmten Zeitdifferenz zeitlich früher angeordnet sind. Ein wesentlicher Vorteil bei diesem Regelverfahren liegt darin, dass damit die Grenzwerte möglichst eng an die weitere Kenngröße gelegt werden kann, sodass ein sehr kleines Fenster gebildet wird.

Die Aufgabe der Erfindung wird für sich eigenständig auch durch das Schweißverfahren gemäß Anspruch 2 gelöst. Dabei ist vorgesehen, dass ein Zeitintervall mit einer Dauer und eine Abtastrate zur Ermittlung der Werte der Kenngröße festgelegt wird, und dass mit jeder Abtastung die Werte der Kenngröße gespeichert werden, worauf zu einem Zeitpunkt (40) von der Steuervorrichtung aus den gespeicherten Werten der Kenngröße, die in dem relativ zu dem Zeitpunkt (40) zeitlich früheren Zeitintervall liegen, ein Mittelwert berechnet wird und der zuletzt gemessene Wert der Kenngröße als die Kontrollgröße verwendet wird, worauf ausgehend von dem Mittelwert des Zeitintervalls ein oberer und ein unterer Grenzwert berechnet wird, und worauf die Kontrollgröße mit dem oberen und mit dem unteren Grenzwert verglichen wird.

Nach der ebenfalls eigenständigen Lösung der Erfindung gemäß Anspruch 3 ist vorgesehen, dass eine erste und eine zweite Anzahl von aufzuzeichnenden Werten der Kenngröße und eine Abtastrate zur Ermittlung der Werte der Kenngröße festgelegt werden, wobei die zweite Anzahl kleiner ist als die erste Anzahl, und dass mit jeder Abtastung die Werte der Kenngröße gespeichert werden, worauf zu einem Zeitpunkt von der Steuervorrichtung aus den gespeicherten Werten der Kenngröße, die relativ zu dem Zeitpunkt zeitlich früher liegen, ein erster Mittelwert und ein zweiter Mittelwert als die Kontrollgröße berechnet werden, worauf ausgehend von dem ersten Mittelwert der ersten Anzahl ein oberer und ein unterer Grenzwert berechnet wird, und worauf die Kontrollgröße mit dem oberen und mit dem unteren Grenzwert verglichen wird.

In einer alternativen Ausführungsvariante ist ein Schweißverfahren zur Durchführung eines Schweißprozesses mit einem, in einem Lichtbogen abschmelzenden Schweißdraht, der mit Energie aus zumindest einer geregelten Stromquelle versorgt wird, vorgesehen, wobei von einer Steuervorrichtung eine Steuerung der Stromquelle und einer Vorschubvorrichtung für den Schweißdraht durchgeführt wird. Dabei ist weiters vorgesehen, dass während des Schweißprozesses aus Kenngrößen des Lichtbogens bzw. des Schweißprozesses, wie Schweißstrom, Schweißspannung oder Widerstand, zumindest eine Kontrollgröße gemessen oder berechnet wird, wobei über die Dauer eines vorbestimmbaren Zeitintervalls Werte der Kontrollgröße aufgezeichnet bzw. in der Steuervorrichtung gespeichert werden. Aus diesen in dem Zeitintervall liegenden Werten wird sodann ein Mittelwert der Kontrollgröße berechnet und davon ausgehend ein oberer und/oder ein unterer Grenzwert festgelegt. Diese Grenzen weisen relativ zu dem Mittelwert der Kontrollgröße eine Differenz auf, die einen geringen Bruchteil des Mittelwerts der Kontrollgröße betragen. Anschließend wird nach einem Überschreiten des oberen oder nach einem Unterschreiten des unteren Grenzwertes durch den momentanen Wert der Kontrollgröße von der Steuervorrichtung ein Kontrollsignal erzeugt. In Abhängigkeit von diesem Kontrollsignal wird sodann durch die Steuervorrichtung der Schweißprozess unterbrochen oder eine Zustandsmeldung von Zuständen des Schweißprozesses erzeugt. Solche Zustandsmeldungen können sich beispielsweise auf den Drahtvorschub, den Zustand des Schweißbrenners als auch die Werkstückqualität beziehen. Zur Durchführung der Überwachung des Schweißprozesses wird der Mittelwert als auch der obere bzw. der untere Grenzwert zeitlich fortlaufend neu berechnet, in dem das zeitlich vor dem momentanen Wert der Kontrollgröße liegende Zeitintervall zeitlich mitgeführt wird. Zur Bestimmung des Mittelwerts der Kontrollgröße tragen somit jeweils jene Werte bzw. Einzelwerte der Kontrollgröße bei, die sich gerade in dem durch das Zeitintervall bestimmten Zeitfenster befinden.

In einer Weiterbildung des Schweißverfahren ist vorgesehen, dass das Kontrollsignal nach Überschreiten der oberen Grenze oder nach unterschreiten der unteren Grenze für die Dauer einer Beobachtungszeit, die länger als eine vordefinierte Kontrollzeit ist, erzeugt wird. Das Vorsehen einer derartigen Kontrollzeit während der ein kurzzeitiges Austreten der Kontrollgröße auf den Bereich zwischen der unteren und der oberen Grenze möglich ist, bietet den Vorteil einer höheren Flexibilität in der Überwachung des Schweißprozesses mit einem entsprechend wählbaren Maß der Fehlertoleranz.

Als Folge der Erzeugung eines Kontrollsignals durch die Steuervorrichtung kann vorgesehen sein, dass durch das Kontrollsignal ein Alarm ausgelöst wird. Dies hat den Vorteil, dass damit Personen, die für den Betrieb der Schweißanlage verantwortlich sind, frühzeitig Informationen über auftretende Probleme bzw. sich ankündigende Defekte an der Schweißanlage zur Verfügung gestellt werden können.

Als Alternative aber auch als zusätzliche Maßnahme kann vorgesehen sein, dass durch das Kontrollsignal eine Ansteuerung der Vorschubvorrichtung zur Veränderung der Vorschubgeschwindigkeit Vd des Schweißdrahts ausgelöst wird. Ebenso kann vorgesehen sein, dass durch das Kontrollsignal eine Ansteuerung einer Kühleinrichtung zur Veränderung der Kühlleistung für einen Schweißbrenner des Schweißgeräts ausgelöst wird. Dies hat den Vorteil, dass damit durch die Steuervorrichtung automatisch regulierend in den Schweißprozess eingegriffen werden kann und unnötige Unterbrechungen des Schweißprozesses vermieden werden können. Schließlich kann aber auch die Maßnahme vorgesehen sein, dass durch das Kontrollsignal eine Unterbrechung des Schweißprozesses ausgelöst wird. Dies hat den Vorteil, dass Beschädigungen des Schweißgeräts, insbesondere Beschädigungen am Schweißbrenner bzw. am Kontaktrohr des Schweißbrenners, in Folge von Blockaden beim Vorschub des Schweißdrahts verhindert werden können.

Für die Überwachung des Schweißprozesses kann weiters vorgesehen sein, dass in einem periodischen Spannungsverlauf der Schweißspannung U(t) Minimumstellen bestimmt werden. Diese zeigen Kurzschlüssen in dem Lichtbogen des Lichtbogenschweißprozesses an. Aus der Anzahl von Minimummstellen, die während eines vorwählbaren Zeitintervalls, das der momentanen Beobachtungszeit jeweils vorausgeht, auftreten, wird eine Häufigkeit H(t) von in dem Lichtbogen auftretenden Kurzschlüssen berechnet und wird diese Häufigkeit H(t) als Kontrollgröße verwendet.

Zusätzlich ist vorgesehen, dass vor der Durchführung eines Schweißprozesses eine minimale Häufigkeit Hmin als untere Grenze bzw. eine maximale Häufigkeit Hmax als obere Grenze für die momentane Häufigkeit H(t) festgelegt wird. Die so vorgesehene Verwendung der Häufigkeit H(t) als Kontrollgroße, erlaubt eine Überwachung des Schweißprozesses, ohne dass dazu die Kenntnis der absoluten Werte von Schweißstrom bzw. Schweißspannung erforderlich sind.

Alternativ aber auch ergänzend dazu kann vorgesehen sein, dass bei dem Schweißverfahren von einem periodischen Spannungsverlauf der Schweißspannung U(t) bzw. bei einem periodischen Stromverlauf des Schweißstroms I(t) eine zeitliche Folge von Periodendauern TB gemessen bzw. bestimmt wird, wobei diese Folge von Periodendauern TB als Kontrollgröße verwendet wird.

Vor der Durchführung eines Schweißprozesses wird eine minimale Periodendauer TBmin als untere Grenze bzw. eine maximale Periodendauer TBmax als obere Grenze für die Folge der Periodendauern TB festgelegt. Dies hat den Vorteil, dass für die Überwachung des Schweißprozesses lediglich Zeitdifferenzen, aufeinander folgenden Kurzschlüssen in dem Lichtbogen bestimmt werden müssen, ohne dass eine genaue Messung bzw. eine genau Kenntnis des Strom- bzw. Spannungsverlaufes erforderlich ist.

Gemäß einem weiteren Ausführungsbeispiel des Schweißverfahrens ist vorgesehen, dass aus der Schweißspannung U(t) und aus dem Schweißstrom I(t) ein momentaner Widerstand R(t) berechnet wird, wobei nun dieser Widerstand R(t) als die Kontrollgröße verwendet wird. Dies hat den Vorteil, dass damit auch Schweißprozesse überwacht werden können, bei denen durch die Steuerung der Stromquelle eine periodische Veränderung von Strom bzw. Spannung fest vorgegeben ist, wie beispielsweise bei einem Pulsschweißprozess.

Dazu kann nun auch vorgesehen sein, dass vor der Durchführung des Schweißprozesses ein zeitlich unveränderlicher minimaler Widerstand RAmin als untere Grenze bzw. ein zeitlich unveränderlicher maximaler Widerstand RAmax als obere Grenze für den momentanen Widerstand R(t) festgelegt wird. Dies hat den Vorteil, dass damit grob fehlerhafte Zustände in einem Schweißprozess bzw. einem Schweißgerät überwacht bzw. ausgeschossen werden können.

Für das Schweißverfahren ist nun weiters auch vorgesehen, dass während dem Schweißprozesses ein zeitlich veränderlicher minimaler Widerstand Rmin(t) als untere Grenze bzw. ein zeitlich veränderlicher maximaler Widerstand Rmax als obere Grenze für den momentanen Widerstand R(t) berechnet wird. Für die Berechnung dieser oberen bzw. unteren Grenzen ist Vorteilhafterweise vorgesehen, dass der maximale Widerstand Rmax(t) aus der Summe eines mittleren Widerstands RM(t) und einer oberen Widerstandsdifferenz EO berechnet wird und dass der minimale Widerstand Rmin aus der Differenz des mittleren Widerstands RM(t) und einer unteren Widerstandsdifferenz Reu berechnet wird. Dabei wird der mittlere Widerstand RM(t) durch eine Mittelwertbildung des momentanen Widerstands R(t) über ein Zeitintervall TI bestimmt. Die obere und die untere Widerstandsdifferenz Reo, Reu bestimmen somit einen Toleranzbereich für den momentanen Widerstand R(t) dessen Lage entsprechend der zeitlichen Veränderung des mittleren Widerstands RM(t) ebenfalls zeitlich veränderlich ist. Dies erlaubt die Festlegung eines relativ engen Toleranzbereiches für den momentanen Widerstand R(t) und eine hohe Flexibilität des Schweißverfahrens bzw. Überwachung, indem diese Grenzen nicht absolut festgelegt werden müssen.

Dabei kann weiters vorgesehen sein, dass bei der Mittelwertbildung zur Berechnung des mittleren Widerstands RM(t) unterschiedliche Bereich in den Zeitintervallen TI durch einen Gewichtsfaktor für den momentanen Widerstand R(t) unterschiedlich stark berücksichtigt werden. Damit können unterschiedliche Überwachungscharakteristiken erreicht werden, indem Widerstandswerte, die relativ zum Beobachtungszeitpunkt weiter zurückliegen, stärker oder schwächer bei der Mittelwertbildung berücksichtigt werden.

Gemäß einer Weiterbildung des Verfahrens kann auch vorgesehen sein, dass der Widerstand R(t) durch Mittelwertbildung über zumindest eine Periodendauer TB des periodischen Spannungsverlaufs der Schweißspannung U(t) bzw. des periodischen Stromverlaufs des Schweißstroms U(t) berechnet wird. Dies hat den Vorteil, dass damit ohnehin nicht oder nur wenig signifikante Fluktuationen im zeitlichen Verlauf des Widerstands R(t) vermieden bzw. gewissermaßen ausgeblendet werden.

Weiters kann vorgesehen sein, dass für die Dauer eines Startintervalls TS beginnend zu einem Startzeitpunkt des Schweißprozesses für die Überwachung des Schweißprozesses von der Steuervorrichtung der zeitlich unveränderliche minimale Widerstand RAmin und der zeitlich unveränderliche maximale Widerstand RAmax verwendet werden und für an das Startintervall TS anschließende Schweißprozessphasen der zeitlich veränderliche, minimale Widerstand Rmin(t) und der maximale Widerstand Rmax(t) verwendet werden.

Als weitere Maßnahme für die Startphase des Schweißverfahrens kann alternativ vorgesehen sein, dass für die Dauer des Startintervalls DS beginnend zu dem Startzeitpunkt eine untere Grenze, die vom minimalen Widerstand RAmin ausgeht und kontinuierlich ansteigt und eine obere Grenze vom maximalen Widerstand RAmax ausgeht und kontinuierlich abfällt, zur Überwachung des Schweißprozesses verwendet wird. Diese Maßnahmen haben den Vorteil, dass die erwartungsgemäß hohen Fluktuationen bzw. Instabilitäten am Beginn eines Schweißprozesses nicht zur Auslösung eines Fehlalarms bzw. einer unerwünschten Unterbrechung des Schweißprozesses führen.

Als weitere Maßnahmen in dem Schweißverfahren kann auch vorgesehen sein, dass die Anzahl der Austritte des Widerstands R(t) aus dem Bereich zwischen dem minimalen Widerstand Rmin(t) und dem maximalen Widerstand Rmax(t) bestimmt wird und diese Anzahl als eine weitere Kontrollgröße verwendet wird.

Dabei ist zusätzlich auch möglich, dass eine Anzahl von Austritten des Widerstands R(t) aus einem Bereich zwischen dem minimalen Widerstand RAmin und dem maximalen Widerstand RAmax bestimmt wird und diese Anzahl ebenfalls als weitere Kontrollgröße verwendet wird. Dies erlaubt die frühzeitige Erkennung einer langsam fortschreitenden Ausbildung von Defekten bzw. Betriebsanomalien des Schweißgerätes.

Die Aufgabe der Erfindung wird für sich eigenständig auch durch das Schweißverfahren gemäß Anspruch 12 gelöst. Demnach ist ein Schweißverfahren zur Durchführung eines Schweißprozesses mit einem in einem Lichtbogen abschmelzenden Schweißdraht, der mit Energie aus zumindest einer geregelten Stromquelle versorgt wird, vorgesehen. Über eine Steuervorrichtung erfolgt eine Steuerung der Stromquelle und einer Vorschubvorrichtung für den Schweißdraht, wobei während des Schweißprozesses die Schweißspannung U(t) gemessen wird. Bei dem Verfahren werden in dem periodischen Spannungsverlauf der Schweißspannung U(t) Minimumstellen, insbesondere auftretende Kurzschlüsse, bestimmt und eine Periodendauer TP zwischen zwei aufeinander folgenden Minimumstellen berechnet. Nach einem Überschreiten eines oberen oder nach einem Unterschreiten eines unteren Grenzwertes für die Periodendauer TP wird von der Steuervorrichtung ein Kontrollsignal erzeugt und in Abhängigkeit von diesem Kontrollsignal der Schweißprozess unterbrochen oder eine Zustandsmeldung von Zuständen des Schweißprozesses, wie dem Drahtvorschub, dem Zustand des Schweißbrenners oder der Werkstückqualität, generiert.

Vorteilhafte Weiterbildungen des Verfahrens sind in den Ansprüchen 13 bis 15 beschrieben.

Zum besseren Verständnis der Erfindung, wird diese anhand der in nachfolgenden Figuren beschriebenen Ausführungsbeispiele näher erläutert.

Es zeigen in schematisch vereinfachter Darstellung:
- Fig. 1: ein Schweißgerät zur Durchführung von Schweißverfahren zum Lichtbogenschweißen;
- Fig. 2: ein schematisiertes Schaltbild des Schweißstromkreises des Schweißgerätes 1 in Verbindung mit einem zu schweißenden Werkstück;
- Fig. 3a, b: ein Diagramm eines schematisiert dargestellten zeitlichen Verlauf der Schweißspannung für einen Lichtbogenschweißprozess zu einem bestimmten Zeitpunkt und ein weiteres entsprechendes Diagramm zu einem weiteren späteren Zeitpunkt des Schweißprozesses;
- Fig. 4: ein Diagramm eines schematisiert dargestellten zeitlichen Verlaufs der Schweißspannung U(t) für einen Lichtbogenschweißprozess;
- Fig. 5: ein Diagramm eines zeitlichen Verlaufs der Häufigkeit H(t) des Auftretens von Kurzschlüssen gemäß Fig. 4;
- Fig. 6: einen Verlauf der Häufigkeit H(t) eines weiteren Ausführungsbeispiels des Schweißverfahrens;
- Fig. 7: ein Diagramm des zeitlichen Verlaufs des momentanen Widerstands R(t) eines Lichtbogens;
- Fig. 8: einen zeitlichen Verlauf des Schweißstroms I(t) bei einem Pulsschweißprozess;
- Fig. 9: einen zeitlichen Verlauf der Schweißspannung U(t), entsprechend dem Pulsschweißprozess gemäß Fig. 8;
- Fig. 10: ein Diagramm eines zeitlich veränderlichen Verlaufes des momentanen Widerstands R(t) eines Lichtbogens;
- Fig. 11: ein Diagramm des zeitlichen Verlaufs des momentanen Widerstands R(t) des Lichtbogens mit zeitlich veränderlichen oberen bzw. unteren Grenzen und zeitlich unveränderlichen oberen bzw. unteren Grenzen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

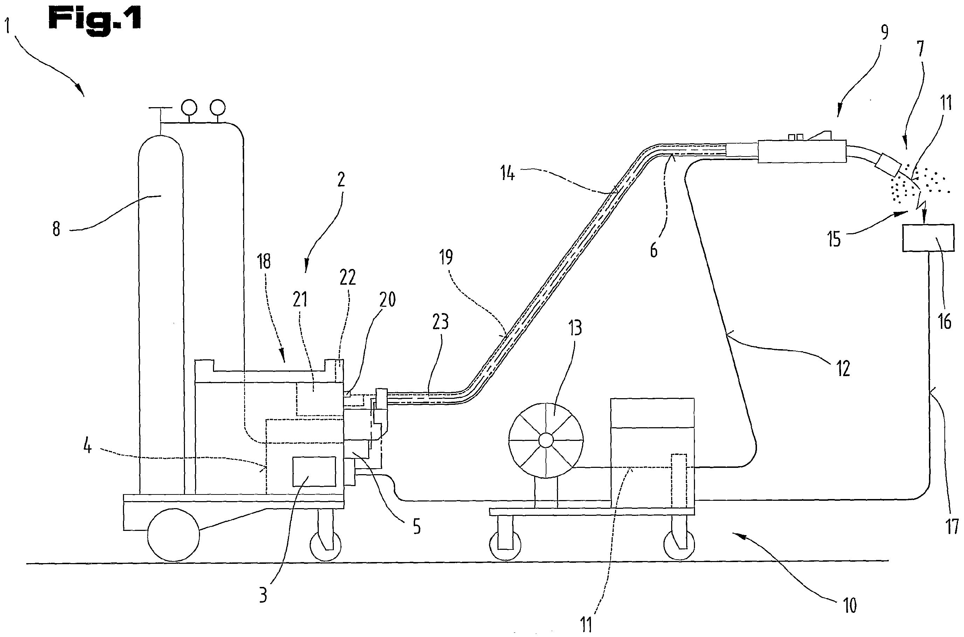

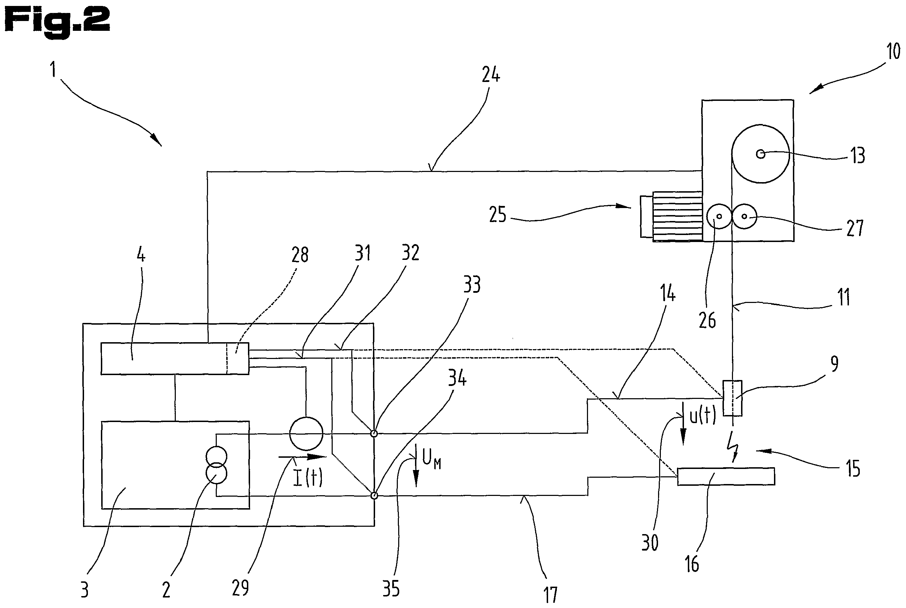

In den Fig. 1 und 2 ist eine Schweißanlage bzw. ein Schweißgerät 1 zur Durchführung von Schweißprozessen bzw. Schweißverfahren zum Lichtbogenschweißen, wie z.B. MIG/MAG-Schweißen oder Pulsschweißen gezeigt. Das Schweißgerät 1 umfasst eine Stromquelle 2 mit einem Leistungsteil 3 und eine Steuervorrichtung 4. Die Steuervorrichtung 4 steht mit einem Steuerventil 5 in Verbindung. Dieses Steuerventil 5 ist in einer Versorgungsleitung 6 für ein Gas 7 zwischen einem Gasspeicher 8 und einem Schweißbrenner 9 angeordnet. Bei dem Gas 7 handelt es sich insbesondere um ein Schutzgas, wie beispielsweise CO₂, Helium, Argon oder dergleichen.

Durch die Steuervorrichtung 4 kann weiters eine Vorschubvorrichtung 10 für einen Schweißdraht 11 angesteuert werden. Der Schweißdraht 11 wird dabei über eine Versorgungsleitung 12 von einer Vorratstrommel 13 in den Bereich des Schweißbrenners 9 zugeführt. Die Vorschubvorrichtung 10 kann selbstverständlich, wie es aus dem Stand der Technik bekannt ist, auch im Schweißgerät 1 integriert sein.

Über eine Versorgungsleitung 14 wird vom Leistungsteil 3 der Stromquelle 2 der Strom zum Aufbauen eines Lichtbogens 15 zwischen dem Schweißdraht 11 und einem Werkstück 16 dem Schweißbrenner 9 bzw. dem Schweißdraht 11 zugeführt. Dabei ist das zu verschweißende Werkstück 16 über eine weitere Versorgungsleitung 17 ebenfalls mit dem Schweißgerät 1 bzw. der Stromquelle 2 verbunden und kann somit über den Lichtbogen 15 ein geschlossener Stromkreis aufgebaut werden.

Das Schweißgerät 1 kann weiters mit einer Kühleinrichtung 18 ausgestattet sein, wobei über einen Kühlkreislauf 19, unter Zwischenschaltung eines Strömungswächters 20 bzw. einer Flüssigkeitspumpe, Flüssigkeit aus einem Kühlmittelbehälter 21 dem Schweißbrenner 9 zu dessen Kühlung zugeführt werden kann.

Zur Einstellung der unterschiedlichen Betriebsarten bzw. der entsprechenden Schweißparameter, ist an dem Schweißgerät 1 eine Ein- und/oder Ausgabevorrichtung 22 vorgesehen. Die übe die Ein- und/oder Ausgabevorrichtung 22 eingestellten Betriebsarten bzw. Schweißparameter werden sodann an die Steuervorrichtung 4 weitergeleitet und werden von dieser anschließend die einzelnen Komponenten der Schweißanlage bzw. des Schweißgeräts 1 angesteuert.

Die einzelnen, das Schweißgerät 1 mit dem Schweißbrenner 9 verbindenden Leitungen, sind vorzugsweise in einem Schlauchpaket 23 geführt bzw. gebündelt angeordnet.

Die Fig. 2 zeigt ein schematisiertes Schaltbild des Schweißstromkreises bzw. des Schweißgerätes 1 in Verbindung mit einem zu schweißenden Werkstück 16.

Die einzelnen Komponenten des Leistungsteils 3 bzw. der Stromquelle 2 sowie die Steuervorrichtung 4 sind in dem Schweißgerät 1 integriert angeordnet. Über die Versorgungsleitungen 14, 17 ist die Stromquelle 2 mit dem Schweißbrenner 9 bzw. dem Werkstück 16 verbunden. Andererseits steht die Steuervorrichtung 4 über eine Steuerleitung 24 auch mit der Vorschubvorrichtung 10 in Verbindung und kann so eine automatisierte Steuerung der Vorschubvorrichtung 10 bzw. der Zuführung des Schweißdrahtes 11 erfolgen. Über einen Antrieb 25 bzw. damit in Verbindung stehenden Förderrollen 26, 27 kann eine Vorschubgeschwindigkeit "Vd" des Schweißdrahts 11 gesteuert werden.
Bei dem erfindungsgemäßen Schweißverfahren ist eine Überwachung der elektrischen Größen des Schweißstromkreises vorgesehen. Die Steuervorrichtung 4 weist dazu eine Messvorrichtung 28 auf, mit deren Hilfe momentane Werte eines Schweißstroms I(t) 29 und einer Schweißspannung U(t) 30 gemessen werden können. Die Messvorrichtung 28 ist über Messleitungen 31, 32 mit Ausgangsklemmen 33, 34 der Stromquelle 2 verbunden und kann so eine Klemmenspannung UK(t) 35 gemessen werden. Unter Vernachlässigung des Widerstands bzw. der Impedanz der Versorgungsleitungen 14, 17 des Schweißstromkreise kann die Klemmenspannung UK(t) 35 stellvertretend die Schweißspannung U(t) 30 verwendet werden und ist es somit nicht erforderlich die Messleitungen 31, 32 bis zum Schweißbrenner 9 bzw. zum Werkstück 16 heranzuführen (strichliert eingezeichnet). Alternativ kann die Schweißspannung U(t) 30 aber auch direkt durch Kontaktierung der Messleitungen 31, 32 an dem Schweißbrenner 9 bzw. dem Werkstück 15 gemessen werden.

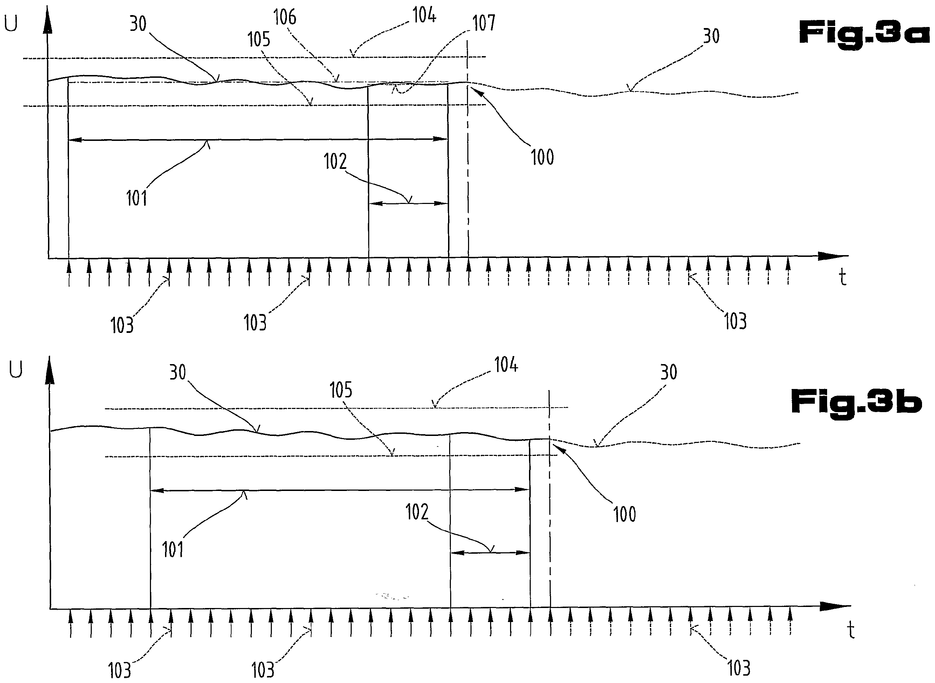

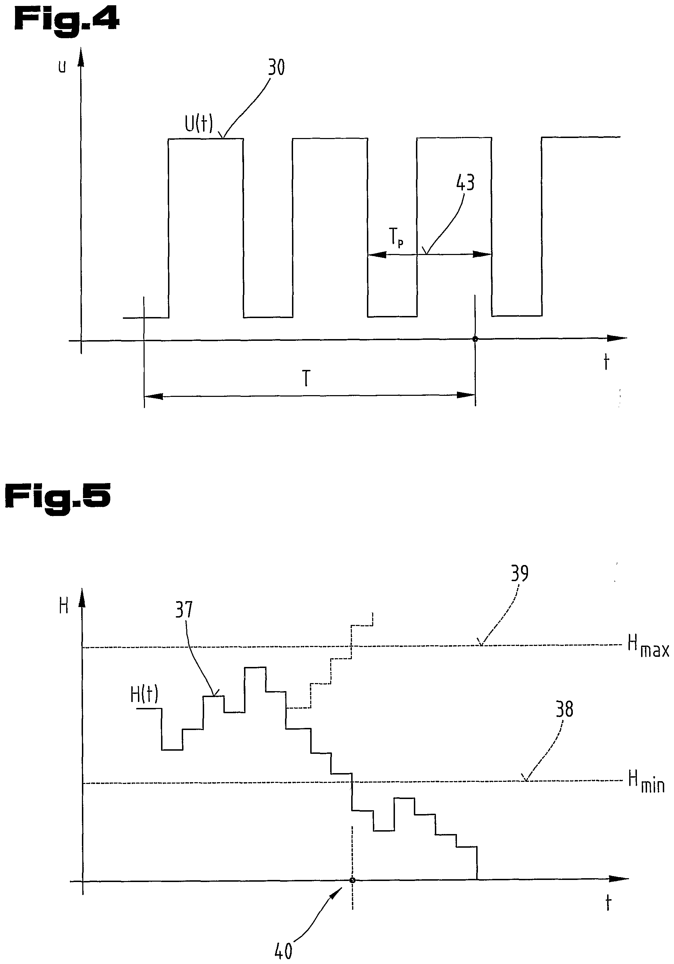

Anhand der Fig. 3 wird ein erstes Ausführungsbeispiel des erfindungsgemäßen Schweißverfahrens beschrieben. Dabei ist in einem Diagramm der zeitliche Verlauf der Schweißspannung U(t) 30 für einen normalen Lichtbogenschweißprozess dargestellt, wogegen nachfolgend in den Fig. 4 und 5 ein Lichtbogenschweißprozess mit einem so genannten Kurzlichtbogen beschrieben wird.

Bei dem zeitlichen Verlauf des Schweißprozesses nach Fig. 3 ist die Schweißspannung 30 bis zu einem Zeitpunkt entsprechend einem momentan mit der Messvorrichtung 28 gemessenen Wert der Kenngröße 100, der schematisch durch eine strichpunktierte Linie symbolisiert ist, dargestellt. Weiters wurde der zeitlich daran anschließende Verlauf der Schweißspannung 30 zum besseren Verständnis durch eine strichlierte Linie in das Diagramm eingezeichnet. Grundsätzlich ist hierzu zu erwähnen, dass bei der Definition der Kenngröße 100 der von der Messvorrichtung erfasste Wert oder berechnete Wert eines oder mehrer Schweißparameters, d.h. der Schweißspannung, des Schweißstromes, des Widerstandes, der Leistung usw., entspricht und bei dem dargestellten Ausführungsbeispiel in Fig. 3 die Schweißspannung 30 als Beispiel herangezogen wird.

Die beiden Diagramme in Fig. 3 zeigen dabei ein und denselben Schweißprozess jedoch zu unterschiedlichen Zeitpunkten, d.h., dass der Schweißprozess unterschiedlich lange durchgeführt wurde, wie dies jeweils durch die momentane Kenngröße 100 symbolisiert ist.
Bei dem erfindungsgemäßen Verfahren ist nun vorgesehen, dass ein erstes Zeitintervall 101 und ein zweites Zeitintervall 102 und eine Abtastrate 103, die schematisch durch Pfeile symbolisiert ist, zur Ermittlung der Kenngrößen 100 festgelegt wird, d.h., dass von der Steuervorrichtung 4 nach der Inbetriebnahme des Schweißgerätes 1 die Dauer für die Zeitintervalle 101 und 102 sowie die Frequenz für die Abtastrate 103, bei der eine Ermittlung der Kenngrößen 100, stattfinden soll, festgelegt wird. Hierzu können die Daten in einem Speicher hinterlegt werden und/oder durch einen Benutzer eingestellt bzw. verändert werden. Wesentlich ist hierbei, dass sich die Zeitdauern für die Zeitintervalle 101 und 102 wesentlich unterscheiden, wobei das erste Zeitintervall 101 länger als das zweite Zeitintervall 30 ist. Dabei kann beispielsweise das erste Zeitintervall 0,5 Sekunden dauern und das zweite Zeitintervall 0,1 Sekunden. Die Abtastrate 103 kann beispielsweise eine Frequenz von 20 kHz aufweisen. Vorzugsweise hat das erste Zeitintervall eine Dauer zwischen 0,3 und 1,0 Sekunden und das zweite Zeitintervall eine Dauer zwischen 0,05 und 0,3 Sekunden.

Wird der Schweißprozess gestartet und ist eine entsprechende Startphase zur Stabilisierung des Prozesses abgelaufen, so wird von der Steuervorrichtung 4 bzw. der Messvorrichtung 28 zu jedem Zeitpunkt der Abtastrate 103 (Pfeile in Fig. 3) ein Wert der Kenngröße 100 ermittelt, d.h., dass aufgrund der festgelegten Frequenz der Abtastrate 103 eine ständige Ermittlung der Kenngröße 100 stattfindet und diese gespeichert wird. Von der Steuervorrichtung 4 werden für die Regelung des Schweißprozesses jedoch immer nur jene gespeicherten Werte der Kenngröße 100 für die weitere Berechnung berücksichtigt, die zeitlich früher bezüglich dem momentanen Wert der Kenngröße 100 innerhalb den Zeitintervallen 101 und 102 liegen. Die weiteren zuvor ermittelten Werte der Kenngröße 100 können zwar, beispielsweise für die Qualitätskontrolle, gespeichert werden, werden jedoch für das erfindungsgemäße Regelverfahren nicht benötigt. Damit ergibt sich, dass die Zeitintervalle 101 und 102 an die momentane bzw. derzeitige Kenngröße 100 gekoppelt sind und die Zeitintervalle 101 und 102, bzw. die darin enthalten gemessen Kenngrößen 100, während des Schweißprozesses mit der momentanen Kenngröße 100 mitgeführt werden. Dies ist anhand der beiden dargestellten Diagramme in Fig. 3 ersichtlich, da die momentane Kenngröße 100 zu unterschiedlichen Zeitpunkten des Schweißprozesses dargestellt sind und die Zeitintervalle 101 und 102 entsprechend dem zeitlichen Fortschritt des Schweißprozesses mitgeführt werden. Daraus ergibt sich, dass sich die in den Zeitintervallen 101 und 102 liegenden Werte der Kenngröße 100 bzw. die Menge der darin enthaltenen Werte ständig ändern, da immer die neueste Kenngröße 100 in die Zeitintervalle 101 und 102 hinzugefügt werden und somit die ältesten Kenngröße 100 aus den Zeitintervall 101 und 102 fällt.

Nachdem also nach dem Start des Schweißprozesses die Startphase abgeschlossen ist und entsprechend viele Einzelwerte der Kenngröße 100 für die Zeitintervalle 101 und 102 ermittelt wurden, wird von der Steuervorrichtung 4 aus diesen innerhalb der Zeitintervalle 101 und 102 liegenden Werten der Kenngröße 100 ein erster Mittelwert 106 für das erste Zeitintervall 101 und ein zweiter Mittelwert 107 für das zweite Zeitintervall 102 berechnet. Anschließend wird ausgehend vom dem ersten Mittelwert 106 des ersten Zeitintervalls 101 ein oberer und ein unterer Grenzwert 104 und 105 berechnet. Der zweite Mittelwert 107 für das zweite Zeitintervall 102 wird als Kontrollgröße verwendet und mit dem oberen und dem unteren Grenzwert 104 und 105 verglichen. Bevorzugt werden hierbei die Grenzwerte 104 und 105 möglichst nahe an den ersten Mittelwert 106 gelegt, d.h., dass beispielsweise vom Mittelwert 106 eine Erhöhung bzw. Verringerung von 10% vorgenommen wird, sodass ein möglichst enges Toleranz-Fenster festgelegt wird. Dabei ist es möglich, dass die Festlegung bzw. Berechnung der Grenzwerte 104 und 105 in Abhängigkeit von weiteren eingestellten Schweißparametern, wie beispielsweise in Abhängigkeit vom zu verschweißenden Material, vom Schweißdraht, usw., unterschiedlich erfolgt.

Durch die unterschiedlichen Längen bzw. Dauern der Zeitintervalle 101 und 102 befinden sich in diesen auch unterschiedlich viele Werte der Kenngröße 100, sodass entsprechend unterschiedliche Mittelwerte 106, 107 gebildet werden. Dabei ist es auch möglich, dass die Dauer des zweiten Zeitintervalls 102 so kurz gewählt wird, dass sich nur ein einziger Wert der Kenngröße 100 darin befindet, sodass die Regelung mit dem zuletzt erfassten Wert der Kenngröße 100 erfolgt, der damit gleichzeitig die Kontrollgröße bildet.

Durch ein derartiges Regelverfahren mit dem ersten Zeitintervall 101, in dem mehrere gemessene Werte von einer oder mehreren Kenngrößen 100 enthalten sind, wird also erreicht, dass die Grenzwerte 104 und 105 für die Überwachung des Verlaufes der zu überwachenden Kenngröße 100 sehr nahe an diese Kenngröße 100 bzw. den entsprechenden Schweißparameter gelegt werden kann und somit eine sehr rasche Änderung des Verlaufes der Kenngröße 100 bzw. des Schweißparameters festgestellt werden kann.

Die Anwendung eines zweiten Zeitintervalls 102 für den Vergleich der Kenngröße 100 mit den berechneten Grenzwerten 101 und 102 ist deshalb von Vorteil, da bei einem Schweißprozess oftmals kurzzeitige Prozesszustandsänderungen, wie beispielsweise durch Verunreinigungen am Werkstück 16, usw., auftreten, die eine kurzzeitige Änderung der Kenngröße 100 hervorrufen jedoch keine wesentlich Auswirkungen auf den Prozess haben. D.h., wird nur der zuletzt ermittelte Wert der Kenngröße 100 herangezogen, so ändert sich dieser häufig und überschreitet dann die Grenzwerte 101 und 102, wodurch von der Steuervorrichtung 4 eine Aktion gestartet wird, die eigentlich nicht erforderlich wäre. Damit dies nicht ständig auftritt, wird das zweite Zeitintervall 102 mit wesentlich kürzerer Dauer in den Regelprozess eingeführt, sodass wiederum ein Mittelwert 107 für den Vergleich mit den Grenzwerten 101 und 102 herangezogen werden kann und somit kurzzeitige starke Änderungen nicht sofort zum tragen kommen.

Es ist auch möglich, dass als äquivalente Ausbildung anstatt des ersten und des zweiten Zeitintervalls 101 und 102 eine wählbare Anzahl von Werten der Kenngröße 100 verwendet wird, d.h., dass beispielsweise die erste Anzahl aus 1000 Werten der Kenngröße 100 und die zweite Anzahl aus 10 Werten der Kenngröße 100 besteht, aus denen dann die Mittelwerte 106, 107 gebildet werden. Dies kann beispielsweise in einfacher Form durch eine Art Schieberegister gebildet werden, in dem immer die zuletzt erfassten Werte der Kenngröße 100 hinzugefügt werden, wodurch die zeitlich am weitesten zurückliegenden Werte der Kenngröße 100 wegfallen. Es ist auch möglich, dass diese Vorgehensart auch mit einem aus dem Stand der Technik bekannten Speicher, dem so genannten First-In Last-Out, durchgeführt wird.

Es kann bei diesem Regelverfahren also gesagt werden, dass aus einer definierten Anzahl von ermittelten Schweißprozessdaten Mittelwerte 106, 107 gebildet werden, wobei aus dem ersten Mittelwert 106, der aus einer wesentlich größeren Anzahl von Werten gebildet wird, Grenzwerte 104 und 105, die möglichst nahe an dem ersten Mittelwert 106 liegen, berechnet werden und diese Grenzwerte 104 und 105 mit dem zweiten Mittelwerte 107, der aus wesentlich weniger Werten gebildet wird, verglichen wird. Diese Mittelwertbildung kann dabei von den verschiedensten Schweißparametern, wie beispielsweise Kurzschlüsse, Schweißstrom, Schweißspannung, einen berechneten oder ermittelten Widerstand, einer berechneten oder ermittelten Leistung, usw., vorgenommen werden.

Anschließend wird das zuvor schematisch, beschriebene Verfahren in Form von Beispielen in den nachstehenden Figuren noch detaillierter beschrieben.

Anhand der Fig. 4 und 5 wird ein weiteres Ausführungsbeispiel des erfindungsgemäßen Schweißverfahrens beschrieben. In Fig. 4 ist in einem Diagramm der zeitliche Verlauf der Schweißspannung U(t) 30 für einen Lichtbogenschweißprozess mit einem so genannten Kurzlichtbogen dargestellt. Bei einem derartigen Schweißprozess kommt es durch das Abschmelzen des Schweißdrahts 11 in den Lichtbogen 15 zur Bildung eines flüssigen Metalltropfens, der beim Lösen von dem Schweißdraht 11 kurzzeitig zwischen dem Schweißdraht 11 und dem Werkstück 16 bzw. dem Schmelzbad auf dem Werkstück 16 einen elektrischen Kurzschluss bildet. Dies hat zur Folge, dass die Schweißspannung U(t) 30 beim Kurzschluss bzw. für die Dauer des Kurzschlusses stark abfällt. Sobald sich der Metalltropfen von dem Schweißdraht 11 zur Gänze gelöst und mit dem Werkstück 16 bzw. der Schweißnaht verbunden hat, steigt die Schweißspannung U(t) 30 wieder an. Somit ergibt sich eine periodische Aufeinanderfolge von niedrigen bzw. hohen Werten der Schweißspannung U(t) 30, mit dem im Diagramm der Fig. 4 vereinfacht dargestellten, periodischen Spannungsverlauf der Schweißspannung U(t) 30. Kurzschlüsse sind dabei durch Kurvenverläufe der Schweißspannung U(t) 30 mit niedrigen Werten erkennbar. Ein stabiler Schweißprozessverlauf weist eine etwa gleich bleibende Anzahl von Kurzschlüssen während eines Zeitintervalls T auf. In einem realen Schweißprozess wird diese Anzahl jedoch zeitabhängig schwanken.

Fig. 5 zeigt ein Diagramm mit dem zeitlichen Verlauf einer Häufigkeit H(t) 37 des Auftretens von Kurschlüssen während des Zeitintervalls T gemäß Fig. 4.

In der Steuervorrichtung 4 des Schweißgeräts 1 werden die momentanen Werte der zeitlich veränderlichen Häufigkeit H(t) 37 des Auftretens von Kurzschlüssen fortlaufend aufgezeichnet und kann somit der Schweißprozess überwacht werden. Dazu ist in der Steuervorrichtung 4 bzw. einem darin softwaremäßig realisierten Überwachungsmodul eine minimale Häufigkeit Hmin 38 als untere Grenze und eine maximale Häufigkeit Hmax 39 als eine obere Grenze gespeichert und führt die Steuervorrichtung 4 ständig einen Vergleich der momentanen Häufigkeit H(t) 37 mit dieser oberen und unteren Grenze durch. Die Werte für diese Grenzen, d.h. die minimale Häufigkeit Hmin 38 bzw. die maximale Häufigkeit Hmax 39 können aus Erfahrungswerten bzw. aus Versuchsschweißungen abgeleitet werden.
Anhand des in Fig. 5 dargestellten zeitlichen Verlaufs der Häufigkeit H(t) 37 soll der Überwachungsvorgang des Schweißprozesses durch die Steuervorrichtung 4 näher erläutert werden. Für die Zeiten, die vor einem Zeitpunkt 40 liegen, befinden sich die Werte der Häufigkeit H(t) 37 zwischen der minimalen Häufigkeit Hmin 38 und der maximalen Häufigkeit Hmax 39 und wird der Schweißprozess für den vor dem Zeitpunkt 40 liegenden Zeitraum als in Ordnung bzw. störungsfrei eingestuft. In der letzten Phase dieses Zeitraums nimmt die Häufigkeit H(t) 37 weiter ab und unterschreitet schließlich zum Zeitpunkt 40 den Wert der minimalen Häufigkeit Hmin 38 und wird dieses Ereignis von der Steuervorrichtung 4 als das Auftreten einer Fehlfunktion in dem Schweißprozess eingestuft, woraufhin die Steuervorrichtung 4 ein Kontrollsignal erzeugt. Die zum Zeitpunkt 40 von der Steuervorrichtung 4 festgestellte Fehlfunktion könnte z.B. darin bestehen, dass die Vorschubgeschwindigkeit Vd des Schweißdrahts 11 zu weit abgesunken ist bzw. ihren Sollwert zu weit unterschritten hat. Das von der Steuervorrichtung 4 erzeugte Kontrollsignal kann nun als Auslöser für unterschiedliche, durch die Steuervorrichtung 4 bewirkte Gegenmaßnahmen verwendet werden. Ausgelöst durch das Kontrollsignal wird beispielsweise der Antrieb 25 der Vorschubvorrichtung 10 durch die Steuervorrichtung 4 derart angesteuert, dass die Vorschubgeschwindigkeit Vd des Schweißdrahts 11 erhöht wird, sodass die Häufigkeit H(t) 37 wieder einen Wert annimmt, der zwischen der minimalen Häufigkeit Hmin 38 und der maximalen Häufigkeit Hmax 39 liegt. Eine andere Ursache für das Absinken der Häufigkeit H(t) 37 unter die minimale Häufigkeit Hmin 38 könnte aber auch sein, dass es zu einer Verklemmung bzw. Blockade des Schweißdrahts 11 in den Schweißbrenner 9 bzw. den Kontaktrohr des Schweißbrenners 9 gekommen ist bzw. dass ein so genannter Rückbrand des Schweißdrahts 11 erfolgt ist und in dessen Folge es zu einem Verschweißen des Schweißdraht 11 mit dem Kontaktrohr des Schweißbrenners 9 gekommen ist. Die Steuervorrichtung 4 kann derart programmiert sein, dass ausgehend von dem erzeugten Kontrollsignal der Schweißprozess abgebrochen wird, indem der Schweißstrom I(t) 29 bzw. die Schweißspannung U(t) 30 abgeschaltet werden und der Antrieb 25 der Vorschubvorrichtung 10 angehalten wird.

Es kann natürlich auch vorkommen, dass die Häufigkeit H(t) 37 die obere Grenze des Wertes der maximalen Häufigkeit Hmax 39 überschreitet, wie dies in Fig. 5 strichliert dargestellt ist. So könnte beispielsweise durch einen Anstieg der Vorschubgeschwindigkeit Vd des Schweißdrahtes 11 durch eine zu große Überschreitung seines Sollwertes die momentane Häufigkeit H(t) 37 so sehr ansteigen, dass es schließlich zu einem völligen Erlöschen des Lichtbogens 25 und zur Ausbildung eines dauerhaften Kurzschlusses zwischen dem Schweißdraht 11 und dem Werkstück 16 kommt. Demgemäß ist vorgesehen, dass die Steuervorrichtung 4 bei einem Überschreiten der oberen Grenze, d.h. des Wertes der maximalen Häufigkeit Hmax 39 wiederum ein Kontrollsignal erzeugt. Ausgehend von diesem Kontrollsignal wird sodann von der Steuervorrichtung 4 der Antrieb 25 der Vorschubvorrichtung 10 derart angesteuert, dass die Vorschubgeschwindigkeit Vd des Schweißdrahts 11 auf seinen Sollwert reduziert wird.

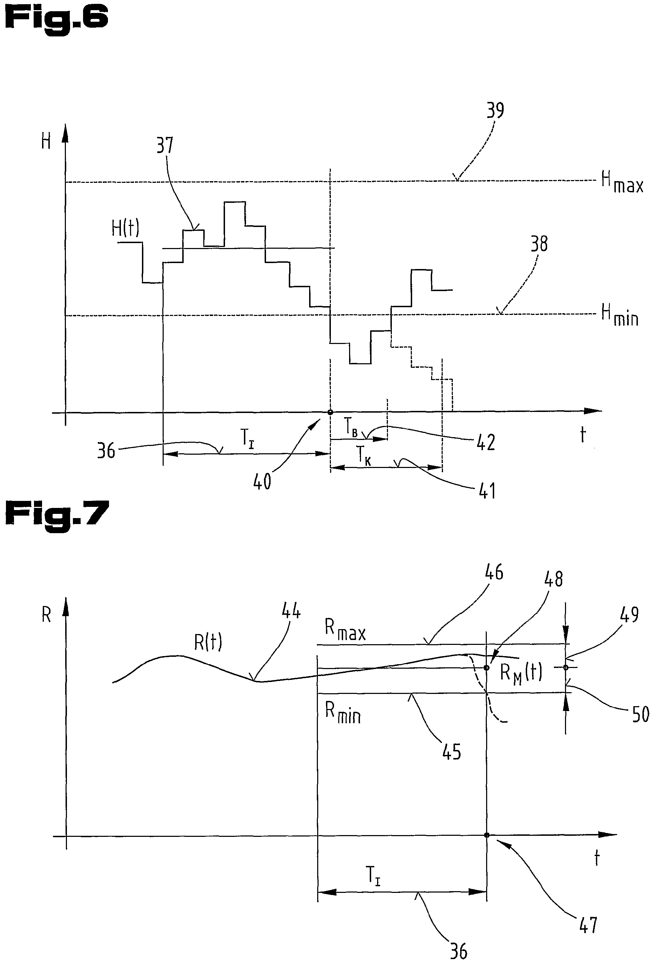

Die Fig. 6 zeigt in einem Diagramm des zeitlichen Verlaufs der Häufigkeit H(t) 37 ein weiteres Ausführungsbeispiel des Schweißverfahrens.

In einer alternativen Ausführung des beschriebenen Verfahrens kann auch vorgesehen werden, dass der obere und der untere Grenzwert für die Häufigkeit H(d) 37, d.h. die maximale Häufigkeit Hmax(t) 39 und die minimale Häufigkeit Hmin(t) 38 durch zeitlich veränderliche Grenzwerte gebildet sind. Dazu werden zumindest über eine Dauer eines vorbestimmbaren Zeitintervalls TI 36 (entspricht dem ersten Zeitintervall 101) Werte der Kontrollgröße, d.h. Werte der Häufigkeit H(t) 37 aufgezeichnet bzw. in die Steuervorrichtung 4 gespeichert. Unter Verwendung jener Werte, die gerade in dem Zeitintervall TI 36 liegen, wird zunächst ein Mittelwert (entspricht dem ersten Mittelwert 106 gemäß Fig. 3) der Kontrollgröße berechnet und werden ausgehend davon der obere und der untere Grenzwert (entsprechend den Grenzwerten 104 und 105), d.h. die maximale Häufigkeit Hmax(t) 39 und die minimale Häufigkeit Hmin(t) 38 festgelegt. Im Gegensatz zu zeitlich unveränderlichen Grenzwerten haben zeitlich veränderliche obere bzw. untere Grenzwerte 104 und 105 für die Kontrollgröße der Häufigkeit H(t) 37 den Vorteil, dass diese sehr flexibel angewendet werden können und der Bereich zwischen den Grenzwerten 104 und 105 sehr eng gewählt werden kann. Die Grenzwerte 104 und 105 können relativ zu dem Mittelwert der Kontrollgröße eine Differenz aufweisen, die nur einen geringen Bruchteil des Mittelwerts der Kontrollgröße ausmachen. Für die Überwachung des Schweißprozesses ist vorgesehen, dass nach einem Überschreiten des oberen oder nach einem Unterschreiten des unteren Grenzwertes 104 und 105 durch den momentanen Wert der Häufigkeit H(t) 37 von der Steuervorrichtung 4 ein Kontrollsignal erzeugt wird. In Abhängigkeit von dem Kontrollsignal kann sodann durch die Steuervorrichtung 4 eine Unterbrechung des Schweißprozesses oder aber auch eine Zustandsmeldung von Zuständen des Schweißprozesses bzw. einzelner Komponenten der Schweißanlage generiert werden. Besonders vorteilhaft lassen sich damit Beschädigungen der Schweißanlage durch einen so genannten Drahtrückbrand vermeiden. Dazu wird in Abhängigkeit von dem Kontrollsignal beispielsweise die Regulierung der Vorschubgeschwindigkeit der Vorschubvorrichtung 10 für den Schweißdraht 11 in geeigneter Weise verändert. Um zeitlich veränderliche obere bzw. untere Grenzwerte 104 und 105 für die Kontrollgröße zu erhalten, erfolgt zeitlich fortlaufend immer wieder eine Neuberechnung sowohl des Mittelwerts der Kontrollgröße als auch der davon abgeleiteten oberen bzw. unteren Grenzwerte104 und 105. Das vor dem momentanen Wert der Kontrollgröße liegende Zeitintervall TI 36 (entspricht dem ersten Zeitintervall 101) bildet somit ein Zeitfenster zur Auswahl jener Werte der Kontrollgröße, die zu der Berechnung bzw. Neuberechnung der oberen bzw. unteren Grenzwerte 104 und 105 herangezogen werden. Das Zeitintervall TI 36 wird somit gewissermaßen zeitlich mitgeführt. Vorteilhaft ist dabei, wenn die jeweilige zeitliche Lage des Zeitintervalls TI 36 den jeweils zuletzt ermittelten Wert der Kontrollgröße unmittelbar vorangehend gewählt wird.

Dazu ist in der Steuervorrichtung 4 neben der unteren und der oberen Grenze für die Häufigkeit H(t) 37 auch der Wert einer Kontrollzeit TK 41 gespeichert. Unterschreitet die Häufigkeit H(t) 37 die minimale Häufigkeit Hmin 38 zum Zeitpunkt 40, so startet damit die Steuervorrichtung 4 die Messung einer Beobachtungszeit TB 42, die so lange andauert, als sich der momentane Wert der Häufigkeit H(t) 37 unterhalb der minimalen Häufigkeit Hmin 38 befindet. Solange diese Beobachtungszeit TB 42 kleiner ist als die vordefinierte Kontrollzeit TK 41, wird der Schweißprozess von der Steuervorrichtung 4 noch als stabil bzw. in Ordnung eingestuft. D.h., wenn die momentane Häufigkeit H(t) 37 noch vor Ablauf der Kontrollzeit TK 41 wieder den Wert der minimalen Häufigkeit Hmin 38 überschreitet bzw. in dem Bereich der minimalen Häufigkeit Hmin 38 und der maximalen Häufigkeit Hmax 39 wechselt, wird von der Steuervorrichtung 4 kein Kontrollsignal erzeugt (durchgezogen eingezeichneter Verlauf der Häufigkeit H(t)). Bleibt hingegen die momentane Häufigkeit H(t) 37 nach dem Unterschreiten der minimalen Häufigkeit Hmin 38 zum Zeitpunkt 40 für eine Beobachtungszeit TB 42, die länger ist als die Kontrollzeit TK 41 unterhalb der minimalen Häufigkeit Hmin 38, so wird von der Steuervorrichtung 4 ein Kontrollsignal erzeugt (strichliert eingezeichneter Verlauf der Häufigkeit H(t)). In der Folge können ausgehend von diesem Kontrollsignal durch die Steuervorrichtung 4 unterschiedliche Maßnahmen getroffen werden. Dies kann beispielsweise eine entsprechende Gegenmaßnahme durch eine Ansteuerung der Vorschubvorrichtung 10, wie vorstehend bereits ausgeführt, aber auch eine Ansteuerung anderer Komponenten des Schweißgeräts 1 durch die Steuervorrichtung 4, wie beispielsweise der Kühleinrichtung 18, oder auch nur die Auslösung eines Alarms bzw. die gänzliche Unterbrechung des Schweißprozesses sein.

Anhand der Fig. 4 kann weiters noch ein alternatives Ausführungsbeispiel des erfindungsgemäßen Schweißverfahrens mit der Überwachung des Schweißprozesses beschrieben werden. Dabei ist vorgesehen, dass anstelle der Häufigkeit H(t) 37 als Kontrollgröße eine Periodendauer TP 43 entsprechend dem zeitlichen Abstand zweier aufeinander folgender Kurzschlüsse bzw. Minima im zeitlichen Verlauf der Schweißspannung U(t) 30 verwendet wird. Ebenso wie der zeitliche Verlauf H(t) 37, wird durch die Steuervorrichtung 4 der zeitliche Verlauf bzw. die Veränderung der Periodendauer TP 43 aufgezeichnet und führt die Steuervorrichtung 4 einen fortlaufenden Vergleich mit einer unteren bzw. einer oberen Grenze für die Periodendauer TP 43 durch. Somit kann ebenfalls bei Überschreiten eines maximalen Werts bzw. der oberen Grenze für die Periodendauer TP 43 durch die Steuervorrichtung 4 ein Kontrollsignal erzeugt werden. Das Überschreiten einer oberen Grenze für die Periodendauer 43 entspricht im Übrigen einer Unterschreitung der minimalen Häufigkeit Hmin 38 durch die momentane Häufigkeit H(t) 37 und sind im übrigen analoge steuerungstechnische Maßnahmen durch die Steuervorrichtung 4, wie vorstehend für die Häufigkeit H(t) 37 beschrieben, vorgesehen.

Bei Verwendung der Periodendauer TP 43 als Kontrollgröße zur Überwachung des Schweißprozesses werden somit in einem periodischen Spannungsverlauf der Schweißspannung U(t) 30 Minimumstellen, d.h. insbesondere auftretende Kurzschlüsse, durch Analyse des fortlaufend aufgezeichneten Spannungsverlaufs der Schweißspannung U(t) 30 bestimmt und daraus Periodendauern TP 43 zwischen jeweils zwei aufeinander folgenden Minimumstellen berechnet. Durch ein Überschreiten eines oberen oder nach einem Unterschreiten eines unteren Grenzwertes 104 und 105 für die Periodendauer TP 43 wird sodann von der Steuervorrichtung 4 ein Kontrollsignal erzeugt und in dessen Folge in Abhängigkeit von dem Kontrollsignal durch die Steuervorrichtung 4 der Schweißprozess unterbrochen oder eine Zustandsmeldung generiert. Vorzugsweise wird das Überschreiten eines oberen Grenzwertes 104 und 105 für die Periodendauer TP 43 der Anlass sein, den Schweißprozess zu unterbrochen, da dies höchstwahrscheinlich einen "Drahtrückbrand" als Ursache hat. Wie vorstehend bereits für die Häufigkeit H(t) 37 beschrieben, ist auch hier die Verwendung von zeitlich veränderlichen oberen bzw. unteren Grenzwerten 104 und 105 für die Periodendauer TP 43 möglich.

Anhand der Fig. 7 bis 10 wird nun ein Ausführungsbeispiel des Schweißverfahrens unter Verwendung eines momentanen Widerstands R(t) 44 des Lichtbogens 15 beschrieben, d.h. dass die Schweißspannung und der Schweißstrom gemessen werden und aus diesen der Widerstand R(t) 44 als Kenngroße 100 berechnet wird. Die Fig. 7 zeigt ein Diagramm des zeitlichen Verlaufs des Widerstands R(t) 44, wie er sich aus der Schweißspannung U(t) 30 und dem Schweißstrom I(t) 29 entsprechend dem Ohmschen Gesetz rechnerisch ergibt. Zur Überwachung des Schweißprozesses wird in diesem Schweißverfahren von der Steuervorrichtung 4 ein fortlaufender Vergleich des momentanen Widerstands R(t) 44 mit einem minimalen Widerstand Rmin 45 (entsprechend dem unteren Grenzwert 105 zum ersten Zeitintervall 101) bzw. einem maximalen Widerstand Rmax 46 (entsprechend dem oberen Grenzwert 104 zum ersten Zeitintervall 101) durchgeführt. Nach einem Überschreiten des maximalen Widerstandes Rmax 46 bzw. einem Unterschreiten des minimalen Widerstandes Rmin 45 durch den momentanen Widerstand R(t) 44 (entsprechend dem Mittelwert der Kenngröße Widerstand zum zweiten Zeitintervall 102) wird wie nachfolgend beschrieben, von der Steuervorrichtung 4 ein Kontrollsignal erzeugt.

Gemäß diesem Ausführungsbeispiel werden die Werte des minimalen Widerstand Rmin 45 bzw. des maximalen Widerstands Rmax 46 nicht auf absolute, d.h. fest vorgegebene Werte festgelegt, sondern sind diese selbst abhängig vom zeitlichen Verlauf des Widerstands R(t) 44. Dazu wird zu einem jeden momentanen Zeitpunkt 47 ein mittlerer Widerstand RM(t) 48 über das Zeitintervall TI 36, das dem momentanen Zeitpunkt 47 unmittelbar vorausgeht, berechnet. Durch Aufzeichnung bzw. Speicherung von Einzelwerten des Widerstands R(t) 44 in der Steuervorrichtung 4 liegt jeweils eine durch die Dauer des Zeitintervalls TI 36 bestimmte Anzahl von Einzelwerten zur Berechnung des genannten Mittelwertes vor. Die untere als auch die obere Grenze für den Widerstand R(t) 44 sind somit ebenfalls von der Zeit abhängig bzw. zeitlich veränderlich. Der maximale Widerstand Rmax(t) 46 bestimmt sich somit aus dem Widerstand RM(t) 48 durch Hinzurechnung einer oberen Widerstandsdifferenz Reo 49 und der minimale Widerstand Rmin(t) 45 bestimmt sich aus dem mittleren Widerstand RM(t) 48 durch Abzug einer unteren Widerstanddifferenz Reu 50. So wie der mittlere Widerstand RM(t) 48, werden auch die Werte des minimalen Widerstandes Rmin(t) 45 und des maximalen Widerstands Rmax(t) 46 von der Steuervorrichtung 4 zur Überwachung des Schweißprozesses fortlaufend aufgezeichnet und wird von der Steuervorrichtung 4 festgestellt, ob der momentane Widerstand R(t) 44 eine dieser unteren bzw. oberen Grenzen über- bzw. unterschreitet. Ist dies der Fall, so kann von der Steuervorrichtung 4 ein Kontrollsignal erzeugt werden und können ausgehend davon weitere Aktionen einzelner Komponenten des Schweißgerätes durch entsprechende Steuerbefehle der Steuervorrichtung 4 ausgelöst werden. Dies ist beispielhaft durch das Unterschreiten des minimalen Widerstands Rmin(t) 46 zu dem Zeitpunkt 47 in der Fig. 7 durch den strichliert dargestellten zeitlichen Verlauf des Widerstands R(t) 44 dargestellt.

Die Verwendung der beschriebenen zeitlich veränderlichen Grenzwerte 104 und 105 für die untere bzw. obere Grenze der Kontrollgröße erlaubt einerseits eine sehr flexible Anwendung des Verfahrens und andererseits ein sehr rasches Reagieren auf plötzlich auftretende Veränderungen in dem Schweißprozess bzw. im Betrieb der Schweißanlage. Durch das zeitliche Mitführen der oberen bzw. unteren Grenzwerte 104 und 105 in Abhängigkeit von dem Mittelwert der Kontrollgröße ist es nämlich möglich, diese Grenzwerte 104 und 105 sehr eng um den momentanen Verlauf der Kontrollgröße, d.h. des momentanen Widerstands R(t) 44 (zum zweiten Zeitintervall102) zu legen. Die Differenz der Grenzwerte 104 und 105 zu dem Mittelwert der Kontrollgröße kann vorteilhafter Weise in einem Bereich von weniger als 1 % des momentanen Widerstands R(t) 44 gewählt werden. Dabei ist vorgesehen, dass die Dauer des Zeitintervalls TI 36 (des ersten Zeitintervalls 101) einen Wert von unter 1 Sekunde hat.

Das hier beschriebene Ausführungsbeispiel unter Verwendung des momentanen Widerstands R(t) 44 als Kontrollgröße zur Überwachung des Schweißprozesses ist beispielsweise besonders geeignet zur Verwendung bei Sprühlichtbogen- oder Pulsschweißprozessen, als auch bei Lichtbogenschweißprozessen mit einer gesteuerten vor- bzw. rückwärts gerichteten Oszilationsbewegung des Schweißdrahts 11.

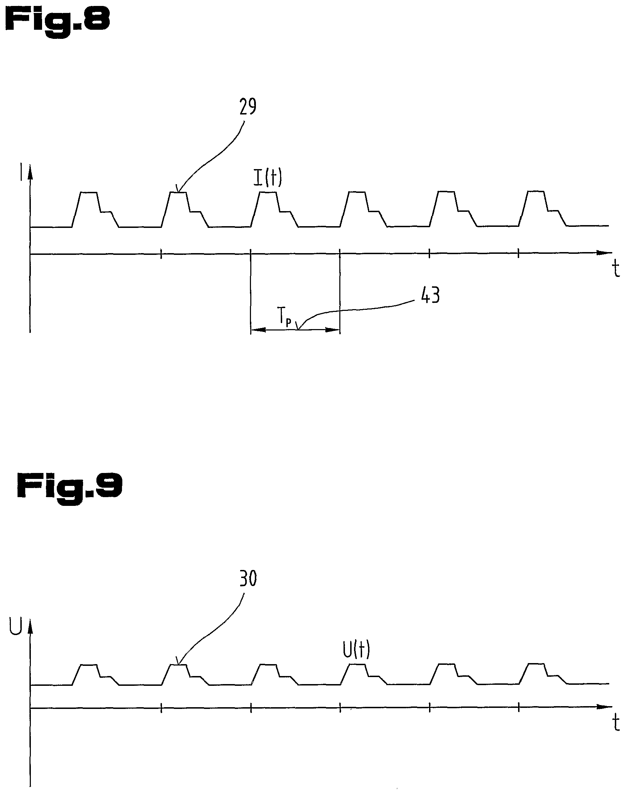

In den Fig. 8 und 9 sind beispielhaft der zeitliche Verlauf des Schweißstroms I(t) 29 (Fig. 8) bzw. der Schweißspannung U(t) 30 (Fig. 9) dargestellt. Dabei ist Vorteilhafterweise vorgesehen, dass für die Kontrollgröße des Widerstands R(t) 44 stellvertretend ein Mittelwert über zumindest eine Periodendauer TP 43 einer Pulsperiode verwendet wird. Diese Mittelung entspricht dem zweiten Mittelwert 107 für das zweite Zeitintervall 102 gemäß Beschreibung nach Fig. 3. Dies hat den Vorteil, dass übermäßige Fluktuationen im zeitlichen Verlauf des Widerstands R(t) 44 (Fig. 7) vermieden werden, da sich diese für die Überwachung des Schweißprozesses als wenig signifikant erweisen.
Alternativ dazu ist es beispielsweise auch möglich, zur Berechnung des Widerstands R(t) 44 Werte der Schweißspannung I(t) 29 bzw. der Schweißspannung U(t) 30 aus einer Pulsphase, d.h. jeweils die maximalen Werte des Strom- bzw. Spannungsverlaufs zu verwenden.

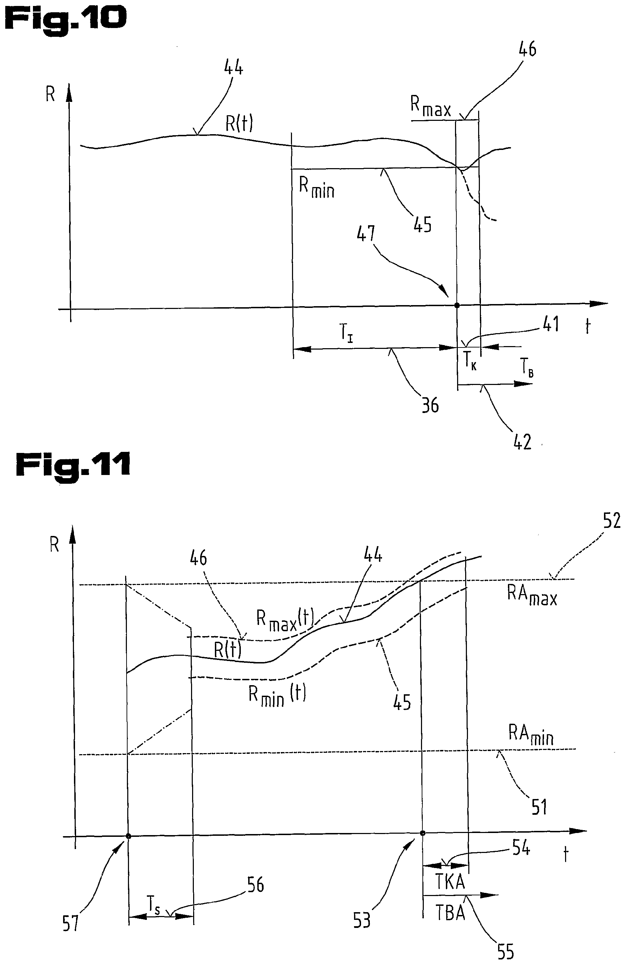

Anhand von Fig. 10 wird nun ein weiters Ausführungsbeispiel des Schweißverfahrens unter Verwendung des Widerstands R(t) 44 als Kontrollgröße zur Überwachung des Schweißprozesses erläutert. Unterschreitet der momentane Widerstand R(t) 44 den Wert des minimalen Widerstands Rmin 45 zu dem Zeitpunkt 47, so startet damit die Steuervorrichtung 4 die Messung der Beobachtungszeit TB 42. Diese dauert so lange an, als sich der momentane Widerstand R(t) 44 unterhalb des minimalen Widerstands Rmin 45 befindet. So lange diese Beobachtungszeit TB 42 kleiner ist, als die vordefinierte Kontrollzeit TK 41, wird der Schweißprozess von der Steuervorrichtung 4 als stabil bzw. in Ordnung eingestuft. Kehrt der momentane Widerstand R(t) 44 noch vor Ablauf der Kontrollzeit TK 41 in den Bereich zwischen dem minimalen Widerstand Rmin 45 und dem maximalen Widerstand Rmax 46 zurück, so wird von der Steuervorrichtung 4 kein Kontrollsignal erzeugt. Als untere bzw. obere Grenze werden dabei jene Werte des minimalen Widerstand Rmin(t) 45 bzw. des maximalen Widerstands Rmax(t) 46 verwendet, die sich ausgehend vom mittleren Widerstand RM(t) 48 zum Zeitpunkt 47 ergeben haben. Alternativ dazu ist aber auch eine fortgesetzte Neuberechnung des mittleren Widerstands RM(t) 48 auch während des Ablaufs der Kontrollzeit TK 41 möglich und somit eine entsprechende Änderung der unteren und oberen Grenze 45, 46.

Gemäß dem hier beschriebenen Ausführungsbeispiel ist nun vorgesehen, dass die Steuervorrichtung 4 derart programmiert ist, dass dann, wenn der momentane Widerstand R(t) 44 nach dem Unterschreiten des minimalen Widerstands Rmin 45 zum Zeitpunkt 47 für eine Beobachtungszeit TB 42, die länger ist als die Kontrollzeit TK 41 unterhalb des minimalen Widerstand Rmin 45 bleibt, von der Steuervorrichtung 4 ein Kontrollsignal erzeugt wird. Dieses kann zum Auslösen eines Alarms oder zur automatischen Unterbrechung des Schweißprozesses weiterverwendet werden. Ein derartiger Fall, dass die untere Grenze bzw. der minimale Widerstand Rmin 45 während einer Beobachtungszeit TB 42, die länger ist als die Kontrollzeit TK 41, ist in Fig. 10 beispielhaft durch den strichliert eingezeichneten Verlauf des momentanen Widerstands R(t) 44 eingezeichnet.

Für die Berechnung des mittleren Widerstands RM(t) 48 kann auch vorgesehen werden, dass unterschiedliche Bereiche in dem Zeitintervall TI 36 (entspricht dem ersten Zeitintervall 101) unterschiedlich stark gewichtet werden, was aber auch für das zweite Zeitintervalls 102 möglich ist. So könnten beispielsweise Bereiche am Beginn des Zeitintervalls TI 36 durch einen entsprechenden Gewichtsfaktor stärker zur Mittelwertbildung beitragen, als Bereiche, die näher am Ende des Zeitintervalls TI 36 liegen. Für die Dauer des Zeitintervalls TI 36 erweisen sich Werte aus einem Bereich von 200 ms bis 950 ms als Vorteilhaft. Als Wert für die Kontrollzeit TK 41 wird ein Wert von der Größenordnung von 10 ms gewählt.

Fig. 11 zeigt ein weiteres Ausführungsbeispiel des erfindungsgemäßen Schweißverfahrens unter Verwendung des Widerstands R(t) 44 als Kontrollgröße zur Überwachung des Schweißprozesses.

In Fig. 11 ist in einem Diagramm der zeitliche Verlauf des Widerstands R(t) 44 (entsprechend einem Mittelwert zum zweiten Zeitintervall 102) als auch der zeitlich veränderlichen, oberen bzw. unteren Grenze, d.h. des minimalen Widerstands Rmin(t) 45 bzw. des maximalen Widerstands Rmax(t) 46 (entsprechend dem ersten Zeitintervall 101 gemäß Fig. 3) dargestellt. Dabei ist nun vorgesehen, dass in der Steuervorrichtung 4 ein vordefinierter, absoluter, minimaler Widerstand RAmin 51 und ein absoluter maximaler Widerstand RAmax 52 gespeichert sind. Wie aus dem Diagramm gemäß Fig. 11 zu ersehen ist, sind relativ langsame, zeitliche Veränderungen des Widerstands R(t) 44 bzw. der zeitlich veränderlichen, unteren bzw. oberen Grenzen, d.h. des minimalen Widerstands Rmin(t) 45 bzw. des maximalen Widerstands Rmax(t), möglich, ohne dass es zum Erkennen einer Fehlfunktion durch die Steuervorrichtung 4 kommt. Um bei derartigen Verläufen eines Schweißprozesses dennoch die Funktionssicherheit des Schweißgerätes 1 sicherstellen bzw. Schäden an dem Schweißgerät 1 vermeiden zu können, sind gemäß diesem Ausführungsbeispiel die genannten, absoluten Schwellwerte 51, 52 vorgesehen.

Diese Schwellwerte 51, 52, d.h. der absolute maximale Widerstand RAmax 52 und der absolute minimale Widerstand RAmin 51 bilden sozusagen ein großes Toleranzfenster für den momentanen Widerstand R(t) 44, das ausgehend von einem, aus einer Datenbank ermittelten Arbeitspunkt um diesen gelegt wird. Es können damit grobe Fehler im Schweißprozess durch die Steuervorrichtung 4 detektiert werden. Diese absoluten Schwellwerte 51, 52 können beispielsweise auch in der Startphase eines Schweißprozesses zur Überwachung herangezogen werden, da dabei höhere Instabilitäten des Schweißprozesses zu erwarten sind.

Aus dem in Fig. 11 dargestellten Diagramm wird auch deutlich ersichtlich, dass die Differenz zwischen dem zeitlich veränderlichen oberen bzw. unteren Grenzwerten, d.h. dem maximalen Widerstand Rmax(t) 46 und dem minimalen Widerstand Rmin(t) 45 wesentlich kleiner gewählt werden kann, als die Differenz der entsprechenden zeitlich unveränderlichen Schwellwerten 51, 52, d.h. dem maximalen Widerstand RAmax 52 und dem minimalen Widerstand RAmin 51. Die Differenz der zeitlich veränderlichen Grenzwerte kann jedenfalls einen geringen Bruchteil der Differenz der zeitlich unveränderlichen Schwellwerte 51, 52 ausmachen.

Durch die Steuervorrichtung 4 des Schweißgeräts 1 findet ein fortlaufender Vergleich des Werts des Widerstands R(t) 44 (entsprechend dem zweiten Zeitintervall 102) mit dem minimalen Widerstand RAmin 51 bzw. den maximalen Widerstand RAmax 52 statt. Zum Feststellen einer Fehlfunktion durch die Steuervorrichtung 4, ist in einer ersten Variante vorgesehen, dass beim Überschreiten des maximalen Widerstands RAmax 52 zu einem Zeitpunkt 53 von der Steuervorrichtung 4 ein Kontrollsignal erzeugt wird. In Reaktion auf dieses Kontrollsignal ist vorzugsweise vorgesehen, dass durch die Steuervorrichtung 4 eine automatische Unterbrechung des Schweißprozesses erfolgt.

In einer alternativen Ausführungsvariante ist hingegen vorgesehen, dass nicht schon alleine das Überschreiten des maximalen Widerstands RAmax 52 bzw. das Unterschreiten des minimalen Widerstands RAmin 51 zum Auslösen eines Kontrollsignals führt, sondern dieses erst zeitlich verzögert erfolgt. Dazu ist in der Steuervorrichtung 4 eine Kontrollzeit TKA 54 für die absoluten Grenzen gespeichert. Nach dem Überschreiten des maximalen Widerstands RAmax 52 durch den momentanen Widerstand R(t) 44 zu dem Zeitpunkt 53 startet die Steuervorrichtung 4 die Messung einer Beobachtungszeit TBA 55, die so lange andauert, als der momentane Widerstand R(t) 44 oberhalb des maximalen Widerstands RAmax 52 oder unterhalb des minimalen Widerstands RAmin 51 liegt. Das Auflösen bzw. Erzeugen eines Kontrollsignals durch die Steuervorrichtung 4 erfolgt dann, wenn diese Beobachtungszeit TBA 55 länger ist, als die vordefinierte Kontrollzeit TKA 54.

Für die Dauer eines Startintervalls TS 56 ab einem Startzeitpunkt 57 des Schweißprozesses ist vorgesehen, dass für die Überwachung des Schweißprozesses von der Steuervorrichtung 4 nur die absoluten Grenzen des minimalen Widerstands RAmin 51 und der maximale Widerstand RAmax 52 bzw. die Schwellwerte 51, 52 verwendet werden. Erst im Anschluss an das Startintervall TS 56 wird von der Steuervorrichtung 4 zur Überwachung mit den enger gesetzten, oberen bzw. unteren Grenzen 104 und 105, d.h. mit dem minimalen Widerstand Rmin(t) 45 und mit dem maximalen Widerstand Rmax(t) 46 übergegangen. Alternativ dazu ist es auch möglich, dass für die Dauer des Startintervalls TS 56 ein kontinuierlich enger werdender Toleranzbereich für die obere und untere Grenze des Widerstands R(t) 44 bei der Überwachung des Schweißprozesses durch die Steuervorrichtung 4 verwendet wird (strichpunktiert eingezeichnet).

Als Wert für die Kontrollzeit TKA 54 wird Vorteilhafterweise ein Wert in der Größenordnung von 10 ms verwendet, während sich als Wert für die Dauer des Startintervalls TS 56 ein Bereich von 200 ms bis 950 ms als vorteilhaft erweist.

Als Folge eines von der Steuervorrichtung 4 unter Anwendung des erfindungsgemäßen Verfahrens erzeugten Kontrollsignals, ist die automatische Einleitung unterschiedlicher Maßnahmen möglich. Diese wären, wie bereits vorstehend beschrieben, die Auslösung eines Alarms, die Beeinflussung der Veränderung des Betriebs unterschiedlicher Komponenten des Schweißgeräts, die Unterbrechung des Schweißprozesses, aber auch die Erzeugung einer Meldung an das zuständige Bedienpersonal, ein defektes Kontaktrohr bzw. einen defekten Schweißbrenner auszutauschen. Als Auslöser für ein Kontrollsignal sind aber auch unterschiedliche Ursachen denkbar. Neben den bereits genannten, könnten dies auch Verschmutzungen auf dem Werkstück 16, beispielsweise durch Öl oder Trennmittel, aber auch Anomalien in der Schutzgasbeschaffenheit des Gases 7 sein.

Zur Beschreibung der Erfindung wurden vorstehend als Kontrollgrößen die Häufigkeit H(t) 37 und die Periodendauer TP 43 des Auftretens von Kurzschlüssen und der momentane Wert des Widerstands R(t) 44 verwendet. Selbstverständlich ist es aber auch möglich, andere physikalische Größen, wie beispielsweise die Leistung des Lichtbogens im Sinne der Erfindung als Kontrollgröße zu verwenden. Auch für diese Größen ist es möglich, über die Dauer des Zeitintervalls TI 36 bzw. die Zeitintervalle 101 und 102 Werte der Kontrollgröße aufzuzeichnen bzw. in der Steuervorrichtung 4 zu speichern, um sodann aus den in diesem Zeitintervall liegenden Werten einen Mittelwert der Kontrollgröße zu berechnen und ausgehend davon obere bzw. untere Grenzwerte für die Kontrollgröße festzulegen. Dabei erfolgt zeitlich fortlaufend ständig eine Neuberechnung des Mittelwerts der Kontrollgröße als auch der oberen bzw. unteren Grenzwerte 104 und 105, in dem die zeitlich vor dem momentanen Wert der Kontrollgröße liegenden Zeitintervalle 101 und 102 zeitlich mitgeführt werden. Kommt es zu einem Überschreiten des oberen oder zu einem Unterschreiten des unteren Grenzwertes 104, 105 durch den momentanen Wert der Kontrollgröße, so wird durch die Steuervorrichtung 4 ein Kontrollsignal erzeugt, in dessen Folge der Schweißprozess unterbrochen bzw. eine Zustandsmeldung über Zustände unterschiedlicher Komponenten der Schweißanlage erzeugt werden kann.

Auch ist es möglich, dass die Grenze für den Schwellwert 51, 52 aus der letzen Schweißung herangezogen werden kann bzw. die Schwellwerte 51, 52 aus einer Datenbank berechnet oder in dieser hinterlegt werden.

Weiters ist es möglich, dass aus den gespeicherten Kenngrößen 100 der Schweißspannung und des Schweißstromes diese gespeichert werden und über die Zeitintervalle 101 und 102 ein Mittelwert des Widerstandes oder der Leistung und anschließend als Kontrollgröße bzw. Kenngröße 100 herangezogen wird. Selbstverständlich ist es auch möglich, dass fortlaufend auf den Kenngrößen 100 der Schweißspannung und des Schweißstromes sofort ein Widerstand oder die Leistung berechnet wird und dieser als Kenngröße 100 für die Zeitintervalle 101 und 102 gespeichert werden und über die Periode der Zeitintervalle 101 und 102 anschließend der Mittelwert gebildet wird. D.h., also, dass entweder sofort oder über die Zeitintervalle 101 und 102 eine Umrechnung zweier Schweißparameter auf eine Kenngröße 100 zur Bildung der Mittelwerte durchgeführt werden kann.

Auch ist es möglich, dass beim erstmaligen Überschreiten oder Unterschreiten der Grenzwerte 104 und 105 durch den Mittelwert des zweiten Zeitintervalls 102 nicht eine Kontrollzeit 54 bzw. eine Beobachtungszeit 55 gestartet wird, sondern dass ein Zähler gestartet wird, der solange hoch bzw. runter gezählt wird, solange der Mittelwert den Grenzwert 104 oder 105 über- bzw. unterschreitet, wobei bei erreichen eines bestimmten Zählerstandes anschließend das Kontrollsignal erzeugt wird. Danach ist es möglich, dass der Zähler wieder rückgesetzt wird. Hierbei ist es auch möglich, dass mehrere Zählerstände als Grenzen hinterlegt sind, sodass je nach Zählerstand unterschiedliche Kontrollsignale ausgesandt werden.
Um den Benutzer alle üblichen Möglichkeiten mit dem Schweißgerät 1 durchführen lassen zu können, ist es möglich, dass die Steuervorrichtung 4 bei einer Änderung des Arbeitspunktes, insbesondere eines Jobwechsel durch den Benutzer, während des Schweißprozesses dies als Neustart des Schweißprozesses behandelt oder über eine definierte Zeitdauer die Kenngrößen ignoriert. Somit wird verhindert, dass durch eine entsprechende Änderung vom Benutzer ein über- bzw. unterschreiten der Grenzwerte 104, 105 sofort wirksam wird, sondern erst dann, wenn wieder ein stabiler Schweißprozess vorliegt.

Auch ist es möglich, dass von der Steuervorrichtung 4 durch ein externes Signal, die nachfolgenden Kenngrößen über einen vordefinierte Zeitdauer oder über die Zeit des Anliegens des externen Signals oder bis zu einem weiteren externen Signal ausblendet und somit diese Kenngrößen 100 nicht für die Auswertung der Mittelwerte herangezogen werden. Dies ist insofern von Vorteil, da bei automatisierten Schweißungen oftmals die Lage des Schweißbrenners verändert wird, sodass sich andere Parameter ergeben. Dies tritt beispielsweise dann auf, wenn von einer horizontalen Schweißung in eine vertikale Schweißung übergegangen wird. Selbstverständlich ist es auch möglich, dass von der Steuervorrichtung 4 bei einer Roboterschweißung die Roboterachsen überwacht werden, worauf die Steuervorrichtung 4 berechnet, ob eine Mittelwert-Überwachung des Schweißprozesses, sprich dieses beschriebene Regelverfahren, sinnvoll ist bzw. durchgeführt werden kann.

Bevorzugt werden von der Steuervorrichtung 4 die Grenzwerte 104, 105 zum ersten Mittelwert des ersten Zeitintervalls 101 beim Kurzlichtbogen-Schweißverfahren 6%, beim Puls-Schweißverfahren 2,5% und beim Sprühlichtbogen-Schweißverfahren 2,0% erhöht bzw. verringert. Die Dauer des ersten Zeitintervalls 101 kann zwischen 0,3 Sek. und 1,0 Sek., insbesondere 0,5 Sek., betragen, wogegen die Dauer des zweiten Zeitintervalls 102 zwischen 0,05 Sek. und 0,3 Sek., insbesondere 0,1 Sek., beträgt.

Vorteilhafte Ausprägungen des beschriebenen Schweißverfahrens sind im Nachfolgenden angegeben. Die nachfolgenden Verfahrensmaßnahmen sind dabei jeweils alternativ oder in Kombination anwendbar.

Entsprechend einer vorteilhaften Ausprägung des beschriebenen Schweißverfahrens wird die jeweilige zeitliche Lage des Zeitintervalls 101, 102 dem jeweils zuletzt ermittelten Wert der Kontrollgröße unmittelbar vorangehend gewählt.

Weiters kann vor der Durchführung des Schweißprozesses ein zeitlich unveränderlicher, unterer Schwellwert 51 und ein zeitlich unveränderlicher, oberer Schwellwert 52 für die Kontrollgröße festgelegt werden, wobei die Differenz zwischen dem zeitlich veränderlichen, oberen Grenzwert 104 und dem zeitlich veränderlichen, unteren Grenzwert 105 kleiner, insbesondere gleich einem Bruchteil der Differenz zwischen dem zeitlich unveränderlichen, oberen Schwellwert 52 und dem zeitlich unveränderlichen, unteren Schwellwert 51 ist.

Ferner kann für die Dauer eines Startintervalls TS 56 beginnend zu einem Startzeitpunkt 57 des Schweißprozesses für die Überwachung des Schweißprozesses von der Steuervorrichtung 4 der zeitlich unveränderliche, untere Schwellwert 51 und der zeitlich unveränderliche, obere Schwellwert 52 verwendet werden und daran anschließend der zeitlich veränderliche, untere Grenzwert 105 und der zeitlich veränderliche, obere Grenzwert 104 verwendet werden.

Darüber hinaus kann für die Dauer des Startintervalls TS 56 beginnend zu dem Startzeitpunkt 57 eine untere Grenze, die von dem zeitlich unveränderlichen, unteren Schwellwert 51 ausgeht und kontinuierlich ansteigt, und eine obere Grenze, die von dem zeitlich unveränderlichen, oberen Schwellwert 52 ausgeht und kontinuierlich abfällt, zur Überwachung des Schweißprozesses verwendet werden.

Außerdem kann die Grenze für den Schwellwert 51, 52 aus einer Datenbank berechnet werden oder in einer Datenbank hinterlegt werden.

Weiters kann die Grenze für den Schwellwert 51, 52 aus der letzten Schweißung herangezogen werden.

Ferner ist es zweckmäßig, dass bei einem Pulsschweißprozess der Widerstand R(t) 44 oder die Leistung durch Mittelwertbildung über zumindest eine Periodendauer TP 43 des periodischen Spannungsverlaufes der Schweißspannung U(t) 30 und/oder des periodischen Stromverlaufes des Schweißstroms I(t) 29 berechnet wird.

Es ist aber auch möglich, dass bei einem Pulsschweißprozess zur Berechnung des Widerstand R(t) 44 ein Zeitpunkt aus einer Puls- oder Basisphase des periodischen Spannungsverlauf bzw. des periodischen Stromverlauf ausgewählt wird.

Außerdem kann bei einem periodischen Spannungsverlauf der Schweißspannung U(t) 30 und/oder bei einem periodischen Stromverlauf des Schweißstroms I(t) 29 eine zeitliche Folge von Periodendauern TP 43 bestimmt werden, wobei die Folge von Periodendauern TP 43 als die Kontrollgröße verwendet wird.

Weiters kann vorgesehen sein, dass durch die Steuervorrichtung in Abhängigkeit von dem Kontrollsignal der Schweißprozess unterbrochen und/oder eine Zustandsmeldung von Zuständen des Schweißprozesses, wie dem Drahtvorschub, dem Zustand des Schweißbrenners oder der Werkstückqualität, generiert wird.

Es kann durch das Kontrollsignal auch ein Alarm ausgelöst werden.

Ferner kann durch das Kontrollsignal eine Ansteuerung der Vorschubvorrichtung zur Veränderung einer Vorschubgeschwindigkeit Vd des Schweißdrahts 11 ausgelöst werden bzw. kann durch das Kontrollsignal eine Ansteuerung einer Kühleinrichtung 18 zur Veränderung der Kühlleistung für einen Schweißbrenner 9 des Schweißgeräts 1 ausgelöst werden.

Außerdem ist es möglich, dass die Steuervorrichtung bei einer Änderung des Arbeitspunktes, insbesondere eines Jobwechsel durch den Benutzer, dies wie einen Neustart des Schweißprozesses behandelt oder über eine definierte Zeitdauer die Kenngrößen ignoriert.

Zudem kann vorgesehen sein, dass von der Steuervorrichtung durch ein externes Signal die nachfolgenden Kenngrößen über eine vordefinierte Zeitdauer oder über die Zeit des Anliegen des externen Signals oder bis zu einen weiteren externen Signal ausgeblendet und diese Kenngrößen nicht für die Auswertung der Mittelwerte 106, 107 herangezogen werden.

Weiters ist es möglich, dass von der Steuervorrichtung bei einer Roboterschweißung die Roboterachsen überwacht werden, worauf die Steuervorrichtung berechnet, ob eine Mittelwert-Überwachung des Schweißprozesses sinnvoll ist bzw. durchgeführt werden soll.

Entsprechend einer zweckmäßigen Ausführung ist vorgesehen, dass das erste Zeitintervall 101 eine Dauer zwischen 0,3 und 1,0 Sekunden, insbesondere 0,5 Sekunden beträgt und das zweite Zeitintervall 102 eine Dauer zwischen 0,05 und 0,3 Sekunden, insbesondere 0,1 Sekunden, aufweist.

Zweckmäßig kann es auch sein, dass von der Steuervorrichtung die Berechnung der oberen und unteren Grenzwerte 104, 105 in Abhängigkeit von weiteren vom Benutzer eingestellten Schweißparametern, insbesondere des zu verschweißenden Materials, die Art des Schweißverfahrens, wie Kurzlichtbogen-Schweißverfahren, Puls-Schweißverfahren oder Sprühlichtbogen-Schweißverfahren, erfolgt.

Entsprechend einer vorteilhaften Ausprägung ist vorgesehen, dass von der Steuervorrichtung bevorzugt die Grenzwerte 104, 105 zum ersten Mittelwert 106 beim Kurzlichtbogen-Schweißverfahren um 6%, beim Puls-Schweißverfahren um 2,5% und beim Sprühlichtbogen-Schweißverfahren um 2,0% erhöht bzw. verringert werden

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Der Ordnung halber sei abschließend darauf hingewiesen, dass zum besseren Verständnis des Aufbaus des Schweißgerät 1 dieses bzw. dessen Bestandteile teilweise unmaßstäblich und/ oder vergrößert und/oder verkleinert dargestellt wurden.

**Bezugszeichenaufstellung**

| | | | |
|---|---|---|---|
| 1 | Schweißgerät | 36 | Zeitintervall TI |
| 2 | Stromquelle | 37 | Häufigkeit H(t) |
| 3 | Leistungsteil | 38 | minimale Häufigkeit Hmin |
| 4 | Steuervorrichtung | 39 | maximale Häufigkeit Hmax |
| 5 | Steuerventil | 40 | Zeitpunkt |
| | | | |
| 6 | Versorgungsleitung | 41 | Kontrollzeit TK |
| 7 | Gas | 42 | Beobachtungszeit TB |
| 8 | Gasspeicher | 43 | Periodendauer TP |
| 9 | Schweißbrenner | 44 | Widerstand R(t) |
| 10 | Vorschubvorrichtung | 45 | minimaler Widerstand Rmin |
| | | | |
| 11 | Schweißdraht | 46 | maximaler Widerstand Rmax |
| 12 | Versorgungsleitung | 47 | Zeitpunkt |
| 13 | Vorratstrommel | 48 | mittlerer Widerstand RM(t) |
| 14 | Versorgungsleitung | 49 | obere Widerstandsdifferenz Reo |
| 15 | Lichtbogen | 50 | untere Widerstandsdifferenz Reu |
| | | | |
| 16 | Werkstück | 51 | Schwellwert |
| 17 | Versorgungsleitung | 52 | Schwellwert |
| 18 | Kühleinrichtung | 53 | Zeitpunkt |
| 19 | Kühlkreislauf | 54 | Kontrollzeit TKA |
| 20 | Strömungswächter | 55 | Beobachtungszeit TBA |
| | | | |
| 21 | Kühlmittelbehälter | 56 | Startintervall TS |
| 22 | Ein- und/oder Ausgabevorrichtung | 57 | Startzeitpunkt |
| 23 | Schlauchpaket | | |
| 24 | Steuerleitung | 100 | Kenngröße |
| 25 | Antrieb | 101 | erstes Zeitintervall |
| | | 102 | zweites Zeitintervall |
| 26 | Förderrolle | 103 | Abtastrate |
| 27 | Förderrolle | 104 | oberer Grenzwert |
| 28 | Messvorrichtung | | |
| 29 | Schweißstrom I(t) | 105 | unterer Grenzwert |
| 30 | Schweißspannung U(t) | 106 | erster Mittelwert |
| | | 107 | zweiter Mittelwert |
| 31 | Messleitung | | |
| 32 | Messleitung | | |
| 33 | Ausgangsklemme | | |
| 34 | Ausgangsklemme | | |
| 35 | Klemmenspannung UK(t) | | |

## Patentansprüche

1. Schweißverfahren zur Durchführung und Überwachung eines Schweißprozesses mit einem in einem Lichtbogen (15) abschmelzenden Schweißdraht (11), der mit Energie aus zumindest einer geregelten Stromquelle (2) versorgt wird, wobei über eine Steuervorrichtung (4) eine Steuerung der Stromquelle (2) und einer Vorschubvorrichtung (10) für den Schweißdraht (11) durchgeführt wird und wobei während des Schweißprozesses aus Kenngrößen des Lichtbogens, wie Schweißstrom, Schweißspannung oder Widerstand, zumindest eine Kontrollgröße gemessen oder errechnet wird, und dass während des Schweißprozesses in einem Speicher unterschiedliche Schweißparameter bzw. Werte der Kontrollgröße gespeichert werden, **dadurch gekennzeichnet, dass** ein erstes (101) und ein zweites Zeitintervall (102) mit unterschiedlichen Dauern und eine Abtastrate (103) zur Ermittlung der Werte der Kenngröße festgelegt werden, und dass mit jeder Abtastung die Werte der Kenngröße gespeichert werden, worauf zu einem Zeitpunkt (40) von der Steuervorrichtung aus den gespeicherten Werten der Kenngröße, die in den relativ zu dem Zeitpunkt (40) zeitlich früheren Zeitintervallen (101, 102) liegen, ein erster Mittelwert (106) und ein zweiter Mittelwert (107) als die Kontrollgröße berechnet werden, worauf ausgehend von dem ersten Mittelwert (106) des ersten Zeitintervalls (101) ein oberer und ein unterer Grenzwert (104, 105) berechnet wird, und worauf die Kontrollgröße mit dem oberen und mit dem unteren Grenzwert (104, 105) verglichen wird.

2. Schweißverfahren zur Durchführung und Überwachung eines Schweißprozesses mit einem in einem Lichtbogen (15) abschmelzenden Schweißdraht (11), der mit Energie aus zumindest einer geregelten Stromquelle (2) versorgt wird, wobei über eine Steuervorrichtung (4) eine Steuerung der Stromquelle (2) und einer Vorschubvorrichtung (10) für den Schweißdraht (11) durchgeführt wird und wobei während des Schweißprozesses aus Kenngrößen des Lichtbogens, wie Schweißstrom, Schweißspannung oder Widerstand, zumindest eine Kontrollgröße gemessen oder errechnet wird, und dass während des Schweißprozesses in einem Speicher unterschiedliche Schweißparameter bzw. Werte der Kontrollgröße gespeichert werden, **dadurch gekennzeichnet, dass** ein Zeitintervall (101) mit einer Dauer und eine Abtastrate (103) zur Ermittlung der Werte der Kenngröße festgelegt wird, und dass mit jeder Abtastung die Werte der Kenngröße gespeichert werden, worauf zu einem Zeitpunkt (40) von der Steuervorrichtung aus den gespeicherten Werten der Kenngröße, die in dem relativ zu dem Zeitpunkt (40) zeitlich früheren Zeitintervall (101) liegen, ein Mittelwert (106, 107) berechnet wird und der zuletzt gemessene Wert der Kenngröße als die Kontrollgröße verwendet wird, worauf ausgehend von dem Mittelwert (106) des Zeitintervalls (101) ein oberer und ein unterer Grenzwert (104, 105) berechnet wird, und worauf die Kontrollgröße mit dem oberen und mit dem unteren Grenzwert (104, 105) verglichen wird.

3. Schweißverfahren zur Durchführung und Überwachung eines Schweißprozesses mit einem in einem Lichtbogen (15) abschmelzenden Schweißdraht (11), der mit Energie aus zumindest einer geregelten Stromquelle (2) versorgt wird, wobei über eine Steuervorrichtung (4) eine Steuerung der Stromquelle (2) und einer Vorschubvorrichtung (10) für den Schweißdraht (11) durchgeführt wird und wobei während des Schweißprozesses aus Kenngrößen des Lichtbogens, wie Schweißstrom, Schweißspannung oder Widerstand, zumindest eine Kontrollgröße gemessen oder errechnet wird, und dass während des Schweißprozesses in einem Speicher unterschiedliche Schweißparameter bzw. Werte der Kontrollgröße gespeichert werden, **dadurch gekennzeichnet, dass** eine erste und eine zweite Anzahl von aufzuzeichnenden Werten der Kenngröße und eine Abtastrate (103) zur Ermittlung der Werte der Kenngröße festgelegt werden, wobei die zweite Anzahl kleiner ist als die erste Anzahl, und dass mit jeder Abtastung die Werte der Kenngröße gespeichert werden, worauf zu einem Zeitpunkt (40) von der Steuervorrichtung aus den gespeicherten Werten der Kenngröße, die relativ zu dem Zeitpunkt (40) zeitlich früher liegen, ein erster Mittelwert (106) und ein zweiter Mittelwert (107) als die Kontrollgröße berechnet werden, worauf ausgehend von dem ersten Mittelwert (106) der ersten Anzahl ein oberer und ein unterer Grenzwert (104, 105) berechnet wird, und worauf die Kontrollgröße mit dem oberen und mit dem unteren Grenzwert (104, 105) verglichen wird.

4. Schweißverfahren nach einem der vorhergehenden Ansprüche, **dadurch gekennzeichnet, dass** die Zeitintervalle (101, 102) an die momentane Kontrollgröße bzw. die momentane Kenngröße gekoppelt werden und somit die Zeitintervalle (101, 102) während des Schweißprozesses mit der momentanen Kontrollgröße mitgeführt werden, sodass sich die Menge der in den Zeitintervallen (101, 102) befindlichen Werte der Kontrollgröße bzw. Werte der Kenngrößen ständig verändert.

5. Schweißverfahren nach einem der vorhergehenden Ansprüche, **dadurch gekennzeichnet, dass** eine Anzahl von Austritten der Kontrollgröße aus einem Bereich zwischen dem zeitlich veränderlichen, unteren Grenzwert (105) und dem zeitlich veränderlichen, oberen Grenzwert (104) bestimmt wird und diese Anzahl als eine weitere Kontrollgröße verwendet wird.

6. Schweißverfahren nach Anspruch 5, **dadurch gekennzeichnet, dass** eine Anzahl von Austritten der Kontrollgröße aus einem Bereich zwischen dem zeitlich unveränderlichen, unteren Schwellwert (51) und dem zeitlich unveränderlichen, oberen Schwellwert (52) bestimmt wird und diese Anzahl als eine weitere Kontrollgröße verwendet wird.

7. Schweißverfahren nach einem der vorhergehenden Ansprüche, **dadurch gekennzeichnet, dass** aus den gespeicherten Kenngrößen der Schweißspannung U(t) (30) und dem Schweißstrom I(t) (29) über die Zeitintervalle (101, 102) ein momentaner Widerstand R(t) (44) oder ein momentane Leistung berechnet wird und der Widerstand R(t) (44) als die Kontrollgröße verwendet wird.

8. Schweißverfahren nach einem der vorhergehenden Ansprüche, **dadurch gekennzeichnet, dass** fortlaufend aus den Kenngrößen der Schweißspannung und dem Schweißstrom ein Widerstand oder Leistung berechnet wird und dieser als Kenngröße für die Zeitintervalle (101, 102) gespeichert wird und über die Periode der Zeitintervalle (101, 102) anschließend gemittelt wird.

9. Schweißverfahren nach einem der Ansprüche 1 bis 6, **dadurch gekennzeichnet, dass** in einem periodischen Spannungsverlauf der Schweißspannung U(t) (30) Minimumstellen bestimmt werden und aus einer Anzahl von Minimumstellen, die während eines Zeitintervalls (102) auftreten, eine Häufigkeit H(t) (37) von in dem Lichtbogen (15) auftretenden Kurzschlüssen berechnet wird, wobei die Häufigkeit H(t) (37) als die Kontrollgröße verwendet wird.

10. Schweißverfahren nach einem der vorhergehenden Ansprüche, **dadurch gekennzeichnet, dass** nach einem Überschreiten des oberen Grenzwertes (104) oder nach einem Unterschreiten des unteren Grenzwertes (105) durch den zweiten Mittelwert (107) von der Steuervorrichtung ein Kontrollsignal erzeugt wird und dass beim erstmaligen Über- oder Unterschreiten der Grenzwerte (104, 105) durch den zweiten Mittelwert (107) ein Zähler gestartet wird, der solange hoch bzw. runter gezählt wird, solange der Mittelwert (106, 107) den Grenzwert (104, 105) über- bzw. unterschreitet, wobei bei erreichen eines bestimmten Zählerstandes anschließend das Kontrollsignal erzeugt wird.

11. Schweißverfahren nach einem der vorhergehenden Ansprüche, **dadurch gekennzeichnet, dass** das Kontrollsignal nach Überschreiten des oberen Grenzwerts (104) oder nach Unterschreiten des unteren Grenzwerts (105) für die Dauer einer Beobachtungszeit, die länger als eine vordefinierte Kontrollzeit ist, erzeugt wird.

12. Schweißverfahren zur Durchführung und Überwachung eines Schweißprozesses mit einem in einem Lichtbogen (15) abschmelzenden Schweißdraht (11), der mit Energie aus zumindest einer geregelten Stromquelle (2) versorgt wird, wobei über eine Steuervorrichtung (4) eine Steuerung der Stromquelle (2) und einer Vorschubvorrichtung (10) für den Schweißdraht (11) durchgeführt wird und wobei während des Schweißprozesses die Schweißspannung U(t) (30) gemessen wird, und dass während des Schweißprozesses in einem Speicher unterschiedliche Schweißparameter bzw. die Kontrollgröße gespeichert werden, **dadurch gekennzeichnet, dass** in einem periodischen Spannungsverlauf der Schweißspannung U(t) (30) Minimumstellen, insbesondere auftretende Kurzschlüsse, bestimmt werden und eine Periodendauer TP (43) zwischen zwei aufeinander folgenden Minimumstellen berechnet wird worauf nach einem Überschreiten eines oberen oder nach einem Unterschreiten eines unteren Grenzwertes (105) für die Periodendauer TP (43) von der Steuervorrichtung (4) ein Kontrollsignal erzeugt wird und durch die Steuervorrichtung (4) in Abhängigkeit von dem Kontrollsignal der Schweißprozess unterbrochen und/oder eine Zustandsmeldung von Zuständen des Schweißprozesses, wie dem Drahtvorschub, dem Zustand des Schweißbrenners oder der Werkstückqualität, generiert wird.

13. Schweißverfahren nach Anspruch 12, **dadurch gekennzeichnet, dass** eine Anzahl von Austritten der Periodendauer TP (43) aus einem Bereich zwischen dem unteren Grenzwert (105) und dem oberen Grenzwert (104) bestimmt wird und diese Anzahl als eine weitere Kontrollgröße verwendet wird.

14. Schweißverfahren nach Anspruch 12 oder 13, **dadurch gekennzeichnet, dass** das Kontrollsignal nach Überschreiten des oberen Grenzwerts (104) oder nach Unterschreiten des unteren Grenzwerts (104) für die Dauer einer Beobachtungszeit, die länger als eine vordefinierte Kontrollzeit ist, erzeugt wird.

15. Schweißverfahren nach einem der Ansprüche 12 bis 14, **dadurch gekennzeichnet, dass** durch das Kontrollsignal eine Ansteuerung der Vorschubvorrichtung zur Veränderung einer Vorschubgeschwindigkeit Vd des Schweißdrahts (11) ausgelöst wird.

## Claims

1. Welding method for implementing and monitoring a welding process with a welding rod (11) that melts in an arc (15), which is supplied with power from at least one controlled power source (2), wherein the power source (2) and a feeding device (10) for the welding rod (11) are controlled by means of a control device (4), and wherein at least one control variable is measured or calculated during the welding process from characteristic variables of the arc, such as welding current, welding voltage or resistance, and different welding parameters or values for the control variable are stored in a memory during the welding process, **characterised in that** a first (101) and a second time interval (102) with different durations and a scanning rate (103) are set in order to determine the values of the characteristic variable, and the values of the characteristic variable are stored with every scan, after which, at an instant of time (40), a first mean value (106) and a second mean value (107) are calculated by the control device as the control variable from the stored values of the characteristic variable, which lie in earlier time intervals (101, 102) relative to the instant (40), whereupon an upper and a lower threshold value (104, 105) are calculated from the first mean value (106) of the first time interval (101), and whereupon the control variable is compared with the upper and with the lower threshold value (104, 105).

2. Welding method for implementing and monitoring a welding process with a welding rod (11) that melts in an arc (15), which is supplied with power from at least one controlled power source (2), wherein the power source (2) and a feeding device (10) for the welding rod (11) are controlled by means of a control device (4), and wherein at least one control variable is measured or calculated during the welding process from characteristic variables of the arc, such as welding current, welding voltage or resistance, and different welding parameters or values for the control variable are stored in a memory during the welding process, **characterised in that** a time interval (101) with a duration and a scanning rate (103) is set in order to determine the values of the characteristic variable, and the values of the characteristic variable are stored with every scan, whereupon, at an instant of time (40), a mean value (106, 107) is calculated by the control device from the stored values of the characteristic variable, which lie in the earlier time interval (101) relative to the instant (40), and the last measured value of the characteristic variable is used as the control variable, whereupon an upper and a lower threshold value (104, 105) is calculated from the mean value (106) of the time interval (101), and whereupon the control variable is compared with the upper and with the lower threshold value (104, 105).

3. Welding method for implementing and monitoring a welding process with a welding rod (11) that melts in an arc (15), which is supplied with power from at least one controlled power source (2), wherein the power source (2) and a feeding device (10) for the welding rod (11) are controlled by means of a control device (4), and wherein at least one control variable is measured or calculated during the welding process from characteristic variables of the arc, such as welding current, welding voltage or resistance, and different welding parameters or values for the control variable are stored in a memory during the welding process, **characterised in that** a first and a second number of values to be recorded for the characteristic variable and a scanning rate (103) are set for determining the values of the characteristic variable, wherein the second number is smaller than the first number, and the values of the characteristic variable are stored with every scan, whereupon, at an instant of time (40), a first mean value (106) and a second mean value (107) are calculated by the control device as the control variable from the stored values of the characteristic variable, which lie earlier in time than the instant (40), whereupon an upper and a lower threshold value (104, 105) are calculated from the first mean value (106) of the first number, and whereupon the control variable is compared with the upper and with the lower threshold value (104, 105).

4. Welding method as claimed in one of the preceding claims, **characterised in that** the time intervals (101, 102) are coupled to the instantaneous control variable or the instantaneous characteristic variable, and the time intervals (101, 102) are thus carried forward with the instantaneous control variable during the welding process, so that the quantity of values of the control variable and values of the characteristic variables in the time intervals (101, 102) constantly changes.

5. Welding method as claimed in one of the preceding claims, **characterised in that** a number of breakouts of the control variable out of a range between the lower threshold value (105), which varies over time, and the upper threshold value (104), which varies over time, is determined and this number is used as another control variable.

6. Welding method as claimed in claim 5, **characterised in that** a number of breakouts of the control variable out of a range between the lower threshold value (51), which does not vary over time, and the upper threshold value (52), which does not vary over time, is determined and this number is used as another control variable.

7. Welding method as claimed in one of the preceding claims, **characterised in that** an instantaneous resistance R(t) (44) or an instantaneous power is calculated from the stored characteristic variables of the welding voltage U(t) (30) and welding current I(t) (29) during the time intervals (101, 102) and the resistance R(t) (44) is used as the control variable.

8. Welding method as claimed in one of the preceding claims, **characterised in that** a resistance or power is continuously calculated from the characteristic variables of the welding voltage and welding current and this is stored as the characteristic variable for the time intervals (101, 102) and is then averaged during the period of the time intervals (101, 102).

9. Welding method as claimed in one of claims 1 to 6, **characterised in that** minimum points are determined in a periodic voltage curve of the welding voltage U(t) (30) and a frequency H(t) (37) of short circuits occurring in the arc (15) (102) is calculated from a number of minimum points during a time interval, and the frequency H(t) (37) is used as the control variable.

10. Welding method as claimed in one of the preceding claims, **characterised in that** after the upper threshold value (104) is exceeded or after there is a drop below the lower threshold value (105) by the second mean value (107), a control signal is generated by the control device, and that when there is a rise above or drop below the threshold values (104, 105) by the second mean value (107) for the first time, a counter is started, which counts up or counts down for as long as the mean value (106, 107) is above or below the threshold value (104, 105), and the control signal is then generated when a specific counter status is reached.

11. Welding method as claimed in one of the preceding claims, **characterised in that** the control signal is generated after the upper threshold value (104) is exceeded or after there is a drop below the lower threshold value (105) for the duration of an observation period, which is longer than a predefined control period.

12. Welding method for implementing and monitoring a welding process with a welding rod (11) which melts in an arc (15), which is supplied with power from at least one controlled power source (2), wherein the power source (2) and a feeding device (10) for the welding rod (11) are controlled by means of a control device (4), and wherein the welding voltage U(t) (30) is measured during the welding process, and different welding parameters and the control variable are stored in a memory during the welding process, **characterised in that** minimum points are determined in a periodic voltage curve of the welding voltage U(t) (30), in particular occurring short circuits, and a period duration TP (43) between two consecutive minimum points is calculated, whereupon, after there is a rise above an upper or after a drop below a lower threshold value (105) for the period duration TP (43), a control signal is generated by the control device (4) and the welding process is halted and/or a status report of statuses of the welding process, such as the feed status of the rod, the status of the welding torch or the workpiece quality, is generated by the control device (4) as a function of the control signal.

13. Welding method as claimed in claim 12, **characterised in that** a number of breakouts of the period duration TP (43) out of a range between the lower threshold value (105) and the upper threshold value (104) is determined and this number is used as another control variable.

14. Welding method as claimed in claim 12 or 13, **characterised in that** the control signal is generated after the upper threshold value (104) is exceeded or after there is a drop below the lower threshold value (104) for the duration of an observation period, which is longer than a predefined control period.

15. Welding method as claimed in one of claims 12 to 14, **characterised in that** the feeding device is activated by the control signal in order to change the feed rate Vd of the welding rod (11).

## Revendications

1. Procédé de soudure pour la réalisation et la surveillance d'un processus de soudure avec un fil de soudure (11) fondant dans un arc électrique (15), qui est alimenté en énergie provenant d'au moins une source de courant régulée (2), un dispositif de commande (4) permettant le contrôle de la source de courant (2) et d'un dispositif d'avance (10) pour le fil de soudure (11) et, pendant le processus de soudure, au moins une grandeur de contrôle étant mesurée ou calculée à partir de grandeurs caractéristiques de l'arc électrique, comme le courant de soudure, la tension de soudure ou la résistance, et, pendant le processus de soudure, différents paramètres de soudure ou différentes valeurs de la grandeur de contrôle étant enregistrées dans une mémoire, **caractérisé en ce qu'**un premier (101) et un deuxième intervalle de temps (102) avec des durées différentes et une fréquence de balayage (103) sont fixés pour la détermination des valeurs de la grandeur caractéristique et **en ce que**, à chaque balayage, les valeurs de la grandeur caractéristique sont enregistrées, une première valeur moyenne (106) et une deuxième valeur moyenne (107) étant calculées en tant que grandeur de contrôle à un moment (40) par le dispositif de commande à partir des valeurs enregistrées de la grandeur caractéristique, qui se trouvent dans les intervalles de temps (101, 102) antérieurs par rapport au moment (40), une valeur limite supérieure et une valeur limite inférieure (104, 105) étant calculées à partir de la première valeur moyenne (106) du premier intervalle de temps (101) et la grandeur de contrôle étant comparée avec la valeur limite supérieure et avec la valeur limite inférieure (104, 105).

2. Procédé de soudure pour la réalisation et la surveillance d'un processus de soudure avec un fil de soudure (11) fondant dans un arc électrique (15), qui est alimenté en énergie provenant d'au moins une source de courant régulée (2), un dispositif de commande (4) permettant le contrôle de la source de courant (2) et d'un dispositif d'avance (10) pour le fil de soudure (11) et, pendant le processus de soudure, au moins une grandeur de contrôle étant mesurée ou calculée à partir de grandeurs caractéristiques de l'arc électrique, comme le courant de soudure, la tension de soudure ou la résistance, et, pendant le processus de soudure, différents paramètres de soudure ou différentes valeurs de la grandeur de contrôle étant enregistrées dans une mémoire, **caractérisé en ce qu'**un intervalle de temps (101) avec une durée et une fréquence de balayage (103) sont fixés pour la détermination des valeurs de la grandeur caractéristique, et **en ce que**, à chaque balayage, les valeurs de la grandeur caractéristique sont enregistrées, une valeur moyenne (106, 107) étant calculée à un moment (40) par le dispositif de commande à partir des valeurs enregistrées de la grandeur caractéristique, qui se trouvent dans l'intervalle de temps (101) antérieur par rapport au moment (40), et la dernière valeur mesurée de la grandeur caractéristique étant utilisée en tant que grandeur de contrôle, une valeur limite supérieure et une valeur limite inférieure (104, 105) étant calculées à partir de la première valeur moyenne (106) de l'intervalle de temps (101) et la grandeur de contrôle étant comparée avec la valeur limite supérieure et avec la valeur limite inférieure (104, 105).

3. Procédé de soudure pour la réalisation et la surveillance d'un processus de soudure avec un fil de soudure (11) fondant dans un arc électrique (15), qui est alimenté en énergie provenant d'au moins une source de courant régulée (2), un dispositif de commande (4) permettant le contrôle de la source de courant (2) et d'un dispositif d'avance (10) pour le fil de soudure (11) et, pendant le processus de soudure, au moins une grandeur de contrôle étant mesurée ou calculée à partir de grandeurs caractéristiques de l'arc électrique, comme le courant de soudure, la tension de soudure ou la résistance, et, pendant le processus de soudure, différents paramètres de soudure ou différentes valeurs de la grandeur de contrôle étant enregistrées dans une mémoire, **caractérisé en ce qu'**un premier et un deuxième nombre de valeurs à enregistrer de la grandeur caractéristique et une fréquence de balayage (103) sont fixés pour la détermination des valeurs de la grandeur caractéristique, le deuxième nombre étant inférieur au premier nombre, et **en ce que**, à chaque balayage, les valeurs de la grandeur caractéristique sont enregistrées, une première valeur moyenne (106) et une deuxième valeur moyenne (107) étant calculées en tant que grandeur de contrôle à un moment (40) par le dispositif de commande à partir des valeurs enregistrées de la grandeur caractéristique, qui sont antérieurs par rapport au moment (40), une première valeur moyenne (106) et une deuxième valeur moyenne (107) étant calculées en tant que grandeur de contrôle, une valeur limite supérieure et une valeur limite inférieure (104, 105) étant calculées à partir de la première valeur moyenne (106) du premier nombre et la grandeur de contrôle étant comparée avec la valeur limite supérieure et avec la valeur limite inférieure (104, 105).

4. Procédé de soudure selon l'une des revendications précédentes, **caractérisé en ce que** les intervalles de temps (101, 102) sont couplés à la grandeur de contrôle momentanée ou à la grandeur caractéristique momentanée et donc les intervalles de temps (101, 102) sont entraînés avec la grandeur de contrôle momentanée, de façon à ce que la quantité de valeurs de la grandeur de contrôle ou les valeurs de la grandeur caractéristique se trouvant dans les intervalles de temps (101, 102) varie en permanence.

5. Procédé de soudure selon l'une des revendications précédentes, **caractérisé en ce qu'**un nombre de sorties de la grandeur caractéristique hors d'une zone entre la valeur limite inférieure (105), variable dans le temps et la valeur limite inférieure (104) variable dans le temps est déterminé et ce nombre est utilisé en tant que grandeur de contrôle supplémentaire.

6. Procédé de soudure selon la revendication 5, **caractérisé en ce qu'**un nombre de sorties de la grandeur caractéristique hors d'une zone entre la valeur seuil inférieure (51) variable dans le temps et la valeur seuil supérieure (52) variable dans le temps est déterminé et ce nombre est utilisé en tant que grandeur de contrôle supplémentaire.

7. Procédé de soudure selon l'une des revendications précédentes, **caractérisé en ce que**, à partir des grandeurs caractéristiques enregistrées de la tension de soudure U(t) (30) et du courant de soudure I(t) (29) sur les intervalles de temps (101, 102), une résistance momentanée R(t) (44) ou une puissance momentanée est calculée et la résistance R(t) (44) est utilisée en tant que grandeur de contrôle.

8. Procédé de soudure selon l'une des revendications précédentes, **caractérisé en ce que**, de manière continue, à partir des grandeurs caractéristiques de la tension de soudure et du courant de soudure, une résistance ou une puissance est calculée et celle-ci est enregistrée en tant que grandeur caractéristique pour les intervalles de temps (101, 102) et est ensuite moyennée sur la période des intervalles de temps (101, 102).

9. Procédé de soudure selon l'une des revendications 1 à 6, **caractérisé en ce que**, dans un tracé de tension périodique de la tension de soudure U(t) (30), des minima sont déterminés et, à partir d'un nombre de minima, qui surviennent pendant l'intervalle de temps (102), une fréquence H(t) (37) de courts-circuits survenant dans l'arc électrique (15) est calculée, la fréquence H(t) (37) étant utilisée en tant que grandeur de contrôle.

10. Procédé de soudure selon l'une des revendications précédentes, **caractérisé en ce que**, après un dépassement de la valeur limite supérieure (104) ou après un passage en dessous de la valeur limite inférieure (105) par la deuxième valeur moyenne (107), un signal de contrôle est généré par le dispositif de commande et **en ce que**, lors du premier dépassement ou du premier passage en dessous des valeurs limites (104, 105) par la valeur moyenne (107), un compteur est démarré, qui compte ou décompte tant que la valeur moyenne (106, 107) dépasse ou passe en dessous de la valeur limite (104, 105),le signal de contrôle étant ensuite généré lorsqu'une valeur de comptage déterminée est atteinte.

11. Procédé de soudure selon l'une des revendications précédentes, **caractérisé en ce que** le signal de contrôle est généré après le dépassement de la valeur limite supérieure (104) ou après le passage en dessous de la valeur limite inférieure (105) pendant la durée d'un temps d'observation qui est supérieur à un temps de contrôle prédéfini.

12. Procédé de soudure pour la réalisation et la surveillance d'un processus de soudure avec un fil de soudure (11) fondant dans un arc électrique (15), qui est alimenté en énergie provenant d'au moins une source de courant régulée (2), un dispositif de commande (4) permettant le contrôle de la source de courant (2) et d'un dispositif d'avance (10) pour le fil de soudure (11) et, pendant le processus de soudure, la tension de soudure U(t) (30) étant mesurée et en ce que, pendant le processus de soudure, différents paramètres de soudure ou différentes valeurs de la grandeur de contrôle étant enregistrées dans une mémoire, **caractérisé en ce que**, dans un tracé de tension périodique de la tension de soudure (U(t) (30), des minima, plus particulièrement des courts-circuits, sont déterminés et une durée de période TP (43) entre deux minima successifs est calculée, un signal de contrôle étant généré par le dispositif de commande (4) après un dépassement d'une valeur limite supérieure ou après un passage en dessous d'une valeur limite inférieure (105) pendant la durée de période TP (43) et le dispositif de commande (4) interrompant le processus de soudure en fonction du signal de contrôle et/ou un message d'état concernant les états du processus de soudure, comme l'avance du fil, l'état du chalumeau ou la qualité de la pièce, étant généré.

13. Procédé de soudure selon la revendication 12, **caractérisé en ce qu'**un nombre de sorties de la durée de période TP (43) hors d'une zone entre la valeur limite inférieure (105) et la valeur limite supérieure (104) est déterminé et ce nombre est utilisé en tant que grandeur de contrôle.

14. Procédé de soudure selon la revendication 12 ou 13, **caractérisé en ce que** le signal de contrôle est généré après le dépassement de la valeur limite supérieure (104) ou après le passage en dessous de la valeur limite inférieure (104) pendant la durée d'un temps d'observation qui est supérieur à un temps de contrôle prédéfini.

15. Procédé de soudure selon l'une des revendications 12 à 14, **caractérisé en ce que** le signal de contrôle déclenche une commande du dispositif d'avance pour la variation d'une vitesse d'avance Vd du fil de soudure (11).
